(19) Europäisches Patentamt
European Patent Office
Office européen des brevets

(11) **EP 3 635 523 B1**

(12) **EUROPÄISCHE PATENTSCHRIFT**

(45) Veröffentlichungstag und Bekanntmachung des Hinweises auf die Patenterteilung:
**15.05.2024 Patentblatt 2024/20**

(21) Anmeldenummer: **18742895.8**

(22) Anmeldetag: **07.06.2018**

(51) Internationale Patentklassifikation (IPC):
**G06F 3/02** (2006.01)     **G06F 3/16** (2006.01)
**G06F 3/023** (2006.01)     **G09B 21/00** (2006.01)

(52) Gemeinsame Patentklassifikation (CPC):
**G06F 3/0233; G06F 3/0219; G06F 3/0237;
G09B 21/002; G09B 21/004;** G06F 3/167

(86) Internationale Anmeldenummer:
**PCT/AT2018/000053**

(87) Internationale Veröffentlichungsnummer:
**WO 2018/223162 (13.12.2018 Gazette 2018/50)**

(54) **VERFAHREN ZUR EINGABE UND AUSGABE EINES AUS ZEICHEN BESTEHENDEN TEXTES**

METHOD FOR INPUTTING AND OUTPUTTING A TEXT CONSISTING OF CHARACTERS

PROCÉDÉ POUR L'ENTRÉE ET LA SORTIE D'UN TEXTE COMPOSÉ DE CARACTÈRES

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **07.06.2017 AT 2422017**

(43) Veröffentlichungstag der Anmeldung:
**15.04.2020 Patentblatt 2020/16**

(73) Patentinhaber: **Caretec International GmbH
1010 Wien (AT)**

(72) Erfinder: **LITSCHEL, Dietmar
1010 Wien (AT)**

(74) Vertreter: **Ellmeyer, Wolfgang
Häupl & Ellmeyer KG
Patentanwaltskanzlei
Mariahilfer Strasse 50
1070 Wien (AT)**

(56) Entgegenhaltungen:
WO-A1-01/11849        US-A1- 2008 297 475
US-A1- 2011 216 006   US-A1- 2012 072 838
US-A1- 2015 113 073   US-A1- 2016 005 150

EP 3 635 523 B1

**Beschreibung**

Die Erfindung betrifft ein Verfahren zur Eingabe und zur Ausgabe eines aus Zeichen bestehenden Textes, wobei der Text bei der Eingabe über eine Eingabeeinheit als eine Kombination aus Volltext und Kurztext eingegeben wird, und wobei der eingegebene Kurztext zumindest ein Kürzel in Form von Zeichen oder Zeichenkombinationen enthält, denen vorbestimmte Volltextinhalte zugeordnet sind.

Die Erfindung bezieht sich auf neuartige Verfahren und Vorrichtungen, zum einfachen und effizienten Schreiben, Lesen und schriftlichen Kommunizieren, die ältere Menschen nicht überfordern und auch gleichzeitig mit der Vermittlung taktiler Texte, die alle Menschen lesen können, um auch Blinden, Taubblinden, Gehörlosen und Personen mit anderen Behinderungen den barrierefreien Zugang zu schriftlichen Texten zu ermöglichen.

Der Stand der Technik beim Schreiben: Die Texte werden derzeit faktisch nur noch in Vollschrift geschrieben, von gängigen Kürzungen abgesehen, sodass die Redundanz an unnötig geschriebenen Zeichen, die man mit Einsatz von Kürzeln vermeiden könnte, sehr groß ist. Da die Texte auch immer häufiger auf kleinen Tastaturen unergonomisch geschrieben werden, verliert auch das effiziente Blindschreiben immer mehr an Bedeutung, während die Schreibfehler immer mehr zunehmen. Der Stand der Technik beim maschinellen Schreiben ist daher auf einem sehr niedrigen Niveau angelangt.

Der Stand der Technik beim Lesen: Auch dabei wird von Kurzschrift faktisch kein Gebrauch gemacht, obwohl die Lesegeschwindigkeit dabei beschleunigt werden könnte. Vor allem dann, wenn nicht nur Wörter, sondern auch Textteile (u.dgl.) als Kürzel verwendet werden; abgesehen davon, dass auf den Bildschirmen viel mehr Kurztexte als Volltexte dargestellt werden könnten. Bei Blinden, die die Texte nur Buchstabe-für-Buchstabe lesen können, ist das Lesen von Volltext besonders langsam und ermüdend, während Gehörlose gesprochene Texte bei Umwandlung in einen Volltext nicht zeitgleich mitlesen können, weil das Lesen des Volltextes langsamer als der übliche Redefluss erfolgen kann.

Beim Schreiben und beim Lesen und somit beim schriftlichen Kommunizieren besteht daher ein großer Erneuerungsbedarf und im Behindertenbereich ein großer latenter Innovationsbedarf.

Aus der US 2012/0072838 A1 geht ein Verfahren zum Ersetzen von Phrasen in einem Text-Editor hervor. In der Einleitung dieser Druckschrift werden zunächst bekannte Verfahren zum Ersetzen einer Abkürzung durch eine Phrase beschrieben, wobei dies durch Eingabe eines Leerzeichens nach der Phrase durchgeführt wird. Wie dort angegeben, entstehen durch diese Art der Eingabe viele unnötige Suchvorgänge und unerwünschte Ersetzungen. Das in der US 2012/0072838 A1 angegebene Verfahren schafft Abhilfe, indem ein berührungsempfindlicher Bildschirm Verwendung und eine definierte Geste mit zwei Berührungspunkten von zwei Fingern eingegeben wird, welche einen eingegebenen Original-String eingrenzen und durch Abstandsveränderung zwischen den Finger-Berührungspunkten die Umwandlung des Original-Strings, z.B. eine Abkürzung, in einen Ersetzungs-String, z.B. eine Phrase, vorgenommen werden kann.

Wie auch immer diese Methode umgesetzt wird, so setzt sie doch einen Bildschirm voraus und stellt zugleich eine Unterbrechung des Eingabevorgangs dar. Bei jeder Umwandlung eines Original-Strings in einen Ersetzungs-String müssen die Finger der Hand zum Bildschirm bewegt und es müssen die Berührungspunkte relativ genau z.B. am Anfang und Ende des Original-Strings gesetzt werden. Ein schneller Schreibvorgang ist damit ausgeschlossen, da die Unterbrechung des Eingabeflusses durch die Geste sehr viel Zeit und Genauigkeit erfordert.

Demgegenüber ist es ein Ziel der Erfindung ein Verfahren anzugeben, das eine so schnelle Eingabe eines Textes ermöglicht, dass z.B. der Inhalt eines Vortrages während dieser von einem Redner wiedergegeben wird, vom Benutzer simultan eingegeben werden kann, dieser also parallel zum Vortrag, den vollen Vortragstext festhalten kann.

Noch dazu soll die Eingabe für einen Sehbehinderten möglich sein, für den es unmöglich wäre, eine Geste, wie sie in dem Verfahren gemäß US 2012/0072838 A1 erforderlich ist, auszuführen, da er den Original-String auf dem Bildschirm nicht sehen und diesen nicht mit den Fingern eingrenzen kann.

In der US 2015/0113073 A1 ist hingegen ein Autokorrekturverfahren für Textnachrichten angegeben, welches einem Empfänger einer Nachricht den Originaltext des Absenders, eine vom Absender ausgewählte Autokorrektur und die dem Absender angebotenen Autokorrekturen zur Verfügung stellt. Da eine Auswahl aus verschiedenen möglichen Autokorrekturen wiederum einen Schritt des Anzeigens und einen Schritt des Bestätigens erfordert, wird die Eingabe wieder unterbrochen und die Schriftgeschwindigkeit reduziert, wobei ein Sehen der angebotenen Autokorrekturen erforderlich ist.

Die WO 01/11849 A beschreibt ein Kodierverfahren für Telefonnummern mit Buchstaben, wobei jeder Zahl eine Gruppe von Buchstaben, z.B. drei Buchstaben zugeordnet ist. Auf diese Weise kann die Telefonnummer so vergeben werden, dass sie in kodierter Form dem Namen des Inhabers entspricht und daher leichter merkbar ist. Überschreitet die Länge des Inhabernamens die maximale Stellenanzahl, so wird eine Abkürzung eingegeben und danach eine ausgewählte Taste gedrückt, um bei einem Gesprächsaufbau die Telefonnummer einzugeben. Eine Eingabe eines Textes mit einer Vielzahl von aneinandergereihten Wörtern, der sich aus Volltext und Kurztext zusammensetzt und zur Übertragung einer Nachricht dient, ist in diesem Dokument allerdings nicht angegeben und aus diesem auch nicht ableitbar.

In der US 2011/0216006 A1 ist ein Eingabeverfahren für Daten angegeben, das die Eingabe von Volltext und Kurzzeichen ermöglicht, wobei aber keine eindeutig unterscheidbare Trennung von Volltext und Kurztext vorgesehen ist, sodass es sehr leicht zu einer falschen Interpretation des Kurztextes kommen kann.

Weiters ist in der US 2016/0005150 A1 ein Dateneingabesystem beschrieben, wobei die Tastatur mindestens vier Tasten aufweist, und vier dieser Tasten alle Buchstaben einer Sprache verteilt zugeordnet sind, wobei die Positionen der Tasten auf Basis einer vom Benutzer durchgeführten Kalibrierung dynamisch definiert sind. Die Eingabe von Wörtern, Phrasen etc. kann ebenso durch Verwendung eines Spracherkennungssystems erfolgen.

In der US 2008/0297475 A1 ist eine Multifunktions-Eingabetaste offenbart, bei der unterschiedliche Tiefen der gedrückten Taste abgefühlt und zugehörige Informationen ausgeben werden können.

Aufgabe der Erfindung ist es somit, ein Verfahren anzugeben, mit dem die Eingabe und das Lesen von Texten schneller durchgeführt werden kann, wobei dieses Verfahren im Schwierigkeitsgrad frei variierbar ist, sodass eine schnelle Erlernbarkeit der Eingabe möglich ist.

Erfindungsgemäß wird dies dadurch erreicht, dass bei der Eingabe zum Trennen von Volltext und Kurztext nach jedem Volltext-Wort die Leertaste (L1) und nach jedem Kürzel eine vorbestimmte Taste (L2) betätigt wird, wobei gegebenenfalls der Text bei der Ausgabe über eine Ausgabeeinheit als eine Kombination aus Volltext und Kurztext ausgegeben wird, und wobei der ausgegebene Kurztext zumindest ein Kürzel in Form von Zeichen oder Zeichenkombinationen enthält.

Die Volltexte, auch Vollschrift oder Vollzeichen genannt, sind ungekürzte Wörter, doch können es auch ein- und mehrstellige Zeichen, wie auch Wortkürzungen wie "usw", "bzw" "etc" "d.h." "asap" (so schnell wie möglich) sein.

Da die Kürzel vom Volltext getrennt sind, können auch die Kürzel ein- und mehrstellige Zeichen sein. Sie werden zum Abrufen von Volltexten eingesetzt, die z.B. in Dateien der Tastaturen oder in anderen Geräten gespeichert sind, mit denen die Tastaturen verbunden sind. Die Kürzel können als im Volltext enthaltener Kurztext zusammen mit diesem ausgegeben, z.B. angezeigt werden oder auch zum Abrufen von Textteilen, Sätzen, Worten, Floskeln und Standardtexten eingesetzt werden. Nach dem Abrufen liegen daher die Texte als Volltexte vor und können in dieser Form ausgegeben, z.B. angezeigt werden.

Die geschriebenen Kürzel werden jedoch bei der Ausgabe in Volltexte elektronisch markiert, sodass sie danach auch als Kürzel ausgegeben werden können. Der ausgegebene Text besteht in diesem Fall aus Volltext und Kurztext.

Somit kann ein Text als Kombination von Volltext und Kurztext z.B. über eine Tastatur eingegeben und in dieser Form, z.B. zur Selbstkontrolle ausgegeben werden oder ein Vortrag über eine Spracherkennungssoftware in einen Text aus Volltext und Kurztext umgewandelt und dann in dieser Form ausgegeben werden.

Gemäß der Erfindung wird nach jedem Volltext-Wort die Leertaste (L1) und nach jedem Kürzel eine vorbestimmte Taste (L2) betätigt. Mit den vorgenannten Tastaturen können die Texte wahlweise in Volltext oder Kurztext (Kürzel) geschrieben werden, sodass der Status der Bedienfunktion durch Einfügen eines Kürzels nicht verändert wird. Die Trennung von Volltext und Kurztext kommt zustande, indem nach den geschriebenen Volltexten (z.B. Wort) die konventionelle Leertaste (L1) wird und nach einem geschriebenen Kürzel eine vorbestimmte Taste, z.B. die neuartige Leertaste (L2) gedrückt wird.

Das Eingeben und/oder Ausgeben von Volltext-Abschnitten ist unverzichtbar, da auch Eigennamen und Fremdwörter geschrieben werden, für die es keine Kürzel gibt. Die im Rahmen der Erfindung angewandten Kürzel sind vorgegebene Kürzel in der jeweiligen Sprache, z.B. Standardkürzel, wie auch persönliche Kürzel des Anwenders, der den Text ein- und/oder ausgibt bzw. liest oder taktil aufnimmt.

Bei der Verwendung von Eingaben mit einer Kombination aus zwei Ziffern müssen Nummern mit zwei Anschlägen geschrieben werden.

Ein Vorteil des numerischen Schreibens besteht darin, dass auch beim numerischen Schreiben die Texte in Volltext und Kurztext geschrieben werden können. Ein weiterer Vorteil ist, dass die zweistelligen Nummern für die Zeichen sehr schnell erlernt werden und die 10 Ziffernanschläge mit kurzen Fingerwegen sehr schnell und auch blind ausgeführt werden können.

Weiters kann der in Volltext und Kurztext vorliegende Text zu einem entfernten Empfänger übertragen werden und dort als Kombination von Volltext und Kurztext ausgegeben, z.B. auf einer Anzeige, z.B. angezeigt werden. Dies wird dann vorteilhaft sein, wenn der Empfänger die für den Kurztext verwendeten Kürzel kennt und sie als entsprechende Volltextinhalte interpretieren kann.

Vor der Übertragung kann der in Volltext und Kurztext vorliegende Text aber auch zunächst in einen Volltext umgewandelt und dann zu einem Empfänger übertragen werden, wo er entweder als Volltext ausgegeben oder wieder in eine Kombination aus Volltext und Kurztext umgewandelt werden, wobei in diesem Fall der dem Empfänger bekannte Kürzelsatz verwendet werden kann, um die Kurztextabschnitte auszugeben.

Der Vorteil einer Ausgabe eines Textes in Form einer Kombination aus Volltext und Kurztext ist besonders hervorzuheben, da hier der Anwender mit der Zeit eine sehr hohe Lesegeschwindigkeit erreichen kann, sobald er die verwendeten Kürzel beherrscht. Es kann dabei die Lesegeschwindigkeit kontinuierlich durch Verwendung immer weiterer Kürzel so gesteigert werden, dass der z.B. hörbehinderte Anwender einem Vortrag unmittelbar durch Lesen des ausgegebenen Voll- und Kurztextes unmittelbar folgen kann, er somit so schnell lesen kann, dass er dem mündlichen Vortrag beim Lesen nicht nachhinkt und daher ein volles Verständnis des Gesprochenen möglich ist.

Auch die Eingabe von Texten als Kombination aus Volltext und Kurztext hat insofern Vorteile, als hier die Verwendung von Kürzeln nach Bedarf erlernt werden kann, es muss daher nicht sofort der ganze Kürzelsatz beherrscht werden, sondern es können über einen längeren Zeitraum immer mehr Kürzel mit dem Volltext kombiniert werden, sodass hier die auf die individuelle Lernfähigkeit des Anwenders Rücksicht genommen werden kann und jeder den Grad des Kurztext-Anteils im Vergleich zum Volltext-Anteil selbst bestimmen. Bei bisherigen Eingabe- und Ausgabeverfahren unter Verwendung von Kurztext musste immer gleich zu Beginn der ganze Kürzelsatz beherrscht werden.

Da die Kürzel unabhängig vom Volltext ein- und ausgebbar sind, sind viele Kürzel zum Abrufen von Volltext-Inhalten verfügbar, was vorteilhaft ist, weil die Länge der Kürzel von der Anzahl der verfügbaren Kürzel abhängt und kurze Kürzel anzustreben sind. Werden noch andere Leerzeichen (L2x) eingesetzt, kann die Kürzelanzahl noch mehr erweitert werden.

Die erfindungsgemäße Ausgabe von Volltext und Kurztext kann die für das Lesen benötigte Zeit verkürzen, sodass eine in einen Text umgewandelte Rede leichter mitverfolgt werden kann.

Nichtbehinderte können Kurztexte schneller lesen, während Gehörlose Vorlesungen in vollem Umfang mitverfolgen können, wenn ihnen diese als Volltext in Kombination mit umgewandeltem Kurztext schnell genug vermittelt werden können, während für geistig Behindere die gespeicherten Fragen und Antworten und beliebige andere Texte mit Kürzel einfach abgerufen werden können.

Blinde können derzeit die Texte nur Zeichen-für-Zeichen langsam lesen, sodass auch für sie der Einsatz von Kürzeln sehr vorteilhaft ist.

Der verwendete Kurztext reduziert die Anzahl der Anschläge und beschleunigt dabei die Schreibgeschwindigkeit, wie auch die über Kürzel abgerufenen Volltexte fehlerfrei ausgegeben werden.

Das Lesen des Kurztextes in Kombination mit Volltext erleichtert und beschleunigt das Lesen und ist für Blinde und Gehörlose dabei sehr vorteilhaft. Die mit Kürzeln ausgegebenen Texte benötigen weniger Platz auf den Bildschirmen, sodass auf gleich großen Bildschirmen entweder mehr Text dargestellt oder die Kürzel größer dargestellt werden können. Abgesehen davon, dass für Kürzel auch kleinere Bildschirme eingesetzt werden können.

Das wahlweise Schreiben von Voll- und Kurzschrift kannten die Handstenographen nicht, sodass sie die Kürzel im Vorhinein erlernen mussten. Das hat sich auch bei der Maschinenstenographie nicht geändert, sodass z.B. die Ausbildung zum Maschinenstenographen beim US-CAT-System zwei Jahre dauert.

Der Grund, weshalb die Vorteile des Kurztextes noch nicht ausgenützt worden sind, liegt darin, dass die Anwender bisher gezwungen wurden, sich die Kenntnisse der Kurzschrift vorweg aneignen zu müssen, was beim erfindungsgemäßen Verfahren nicht erforderlich ist, weil sich die Anwender die Kenntnisse der Kürzel mit "learning-by-doing" aneignen können.

In weiterer Ausbildung der Erfindung kann vorgesehen sein, dass die Zeichen aus der Kombination aus numerischen und/oder alphanumerischen Zeichen, vorzugsweise zwei Ziffern einer Tastatur eingegeben werden.

Beim numerischen Schreiben werden die Zeichen mit Zweifachanschlag von Ziffern geschrieben, sodass mit den 100 Nummern (00 bis 99) Klein- und Großbuchstaben, die Ziffern selbst, sowie fast alle Satz- und Sonderzeichen geschrieben werden können. Für einige der Zeichen, wie z.B. die Großbuchstaben können auch andere Eingaben vorgesehen sein, sodass die zweistelligen Nummern auch für andre Zwecke eingesetzt werden können.

In diesem Zusammenhang sind zur Ausführung des erfindungsgemäßen Verfahrens Beidhandtastaturen, Einhandtastaturen und Einfingertastaturen anwendbar. Bei den Beidhand- und Einhandtastaturen werden Zeichen mit Akkordanschlägen geschrieben. Bei Einfingertastaturen können mit einem Finger zwei oder mehr benachbarte Tasten mit Kombinationsanschlägen gemeinsam gedrückt werden.

Auf den Tastaturen können neben der realen Tastaturoberfläche auch beliebig viele virtuelle Tastaturoberflächen (der dritten Dimension, wie bei den Großbuchstaben der PC-Tastatur) eingesetzt werden, die mit der realen Tastaturoberfläche kommunizieren. Auch auf den virtuellen Tastaturoberflächen können jeweils weitere 100 Nummern (00 bis 99) geschrieben werden.

Wie oben bereits ausgeführt, werden die Zeichen bei den Beidhand- und Einhandtastaturen mit Akkordanschlägen geschrieben, während bei den Einfingertastaturen zwei oder mehr benachbarte Tasten mit Kombinationsanschlägen mit dem Finger gemeinsam gedrückt werden. Bei ihnen können zur Erweiterungen ihrer Funktionen auch virtuelle Tastaturoberflächen eingesetzt werden.

Als Tasten können Hubtasten, Sensortasten und Kombinationen von Hub- und Sensortasten angewendet werden. Das können selbständige (alleinstehende) Tastaturen, Tastaturen im kabellosen Verbund mit fremden Geräten und Tastaturen sein, die in fremden Geräten integriert sind.

Die Beidhandtastaturen sind mit den Braille-Tastaturen der Blinden vergleichbar, bei denen die Tasten mit den vier Fingern der linken und rechten Hand mit oder ohne Unterstützung der Daumen bedient werden. In diesem Modus können bis zu 256 Braillezeichen geschrieben werden. Sie gehen mit der Matrix der Braillezeichen konform, die mit 8 Braillepunkten ausgestattet ist und piezo-elektrisch angehoben und abgesenkt werden können. Mit den 8 Punkten können ebenfalls 256 Punktkombinationen dargestellt werden.

Die Braille-Tastaturen haben sich beim Schreiben von BrailleTastaturen gut bewährt, da sie auch als kleine, mobil einsetzbare Braille-Organizer eingesetzt werden können.

Beidhandtastaturen können zum Schreiben von Braille eingesetzt werden, sind aber in erster Linie für den universellen Einsatz vorgesehen; als eigenständige Geräte, wie z.B. Organizer, die für zahlreiche Zwecke eingesetzt werden können. So auch, wie bereits erwähnt, zum Schreiben von Voll- und Kurztext und auch zum numerischen Schreiben, bei dem die Zeichen mit zwei Ziffern geschrieben werden.

Bei Einhandtastaturen werden die Tasten mit den drei mittleren Fingern der linken oder rechten Hand, mit oder ohne Unterstützung des Daumens und des kleinen Fingers mit Akkordanschlägen bedient. Sie sind mit der Einhand-Braille-Tastatur vergleichbar. Sie haben den Vorteil, dass die freie zweite Hand für andere Zwecke eingesetzt werden kann. Sie sind daher handlicher als die Beidhandtastaturen und können dennoch den hohen Anforderungen unserer Erfindungen gerecht werden. Auch bei ihnen ist das numerische Schreiben vorgesehen, wie auch das wahlweise Schreiben von Vollzeichen und Kürzeln.

Bei Einfingertastaturen ist ein Finger der linken oder rechten Hand für Einzel- und Kombinationsanschläge vorgesehen und aufgrund ihrer Kleinheit prädestiniert, in Verbindung mit kleinen Geräten (z.B. Smartphones) eingesetzt zu werden.

Ein weiterer Aspekt der Erfindung kann darin bestehen, dass die eingegebenen Zeichen über eine taktile Reizerzeugungsvorrichtung mittels taktiler Ausgabe ausgegeben werden, was ein Schreiben von Texten mit taktiler Selbstkontrolle ermöglicht.

Die Blindenschrift Braille ist die einzige weltweit eingesetzte Blindenschrift, wobei das Lesen der erhaben dargestellten Braillepunkte, die angehoben und abgesenkt werden können, sehr schwierig ist, sodass nur mehr 5% aller Blinden vom Braillelesen Gebrauch machen. Die meisten verwenden daher Brailletastaturen mit künstlicher Sprachausgabe. Die erhoffte Problemlösung ist damit jedoch nicht aufgegangen, da die Sprachausgabe den Analphabetismus unter den Blinden fördert.

Da keine Problemlösung beim Braille gefunden werden konnte, haben die Erfinder ein neuartiges Verfahren entwickelt. Bei diesem werden die auf den vorgenannten Tasten geschriebenen realen Zeichen (oder Kürzel) automatisch in virtuelle umgewandelt und mit flüchtigen Vibrationen auf dem Körper des Scheibers (=Empfängers) taktil ausgegeben. Der Schreiber kennt die Vibrationen, mit denen ihm die Zeichen (oder Kürzel) vermittelt werden und kann daher auch selbst feststellen, ob die Ausgabe mit der Eingabe korrespondiert. Ist das nicht der Fall, so kann das nur ein Fehlanschlag auf der Tastatur gewesen sein.

Da die Informationsvermittlung an den Schreiber (= Empfänger) taktil erfolgt, ist sie barrierefrei und kann daher von allen Menschen eingesetzt werden.

Auch die Taubblinden sind auf Braille angewiesen, zusätzlich aber auch noch von den Lormenzeichen. Diese Zeichen vermittelt der Schreiber dem taubblinden Empfänger die Buchstaben, indem er mit seinem Finger Punkt und Striche in dessen Hand und Finger an vorgegebenen Positionen ausführt.

Um auch existierende Text lesen zu können, werden die zu lesenden Zeichen oder Kürzel in unsere Tastaturen eingelesen und dabei mit dem erfindungsgemäßen Verfahren lesbar gemacht. D.h., dass das eingelesene reale Zeichen in virtuelle Zeichen oder Kürzel umgewandelt und dem Empfänger mit Vibrationen auf seinen Körper taktil ausgegeben wird, jedoch ohne Selbstkontrolle, weil das ausgegeben Zeichen nur das eingelesene sein kann.

Die zu lesenden Texte können auch Zeichen sein, die der blinde oder taubblinde Empfänger mit E-Mails oder mit Messenger-Diensten, z.B. Skype, Whats App etc. empfangen hat. Die Fingerzu-Hand-Kommunikation mit Lormen wird obsolet, weil Taubblinde auch fremdgeschriebene Zeichen (Kürzel) empfangen, lesen und beliebige Texte selbst schreiben können.

Da auch Kürzel vermittelt werden können, kann die Lesegeschwindigkeit stark beschleunigt werden. Werden dem Empfänger Kürzel vermittelt, die er noch nie selbst verwendet hat, so können diese in Volltext ausgegeben oder in ihm bekannte Kürzel umgewandelt und ausgegeben werden.

Die Ausgabegeschwindigkeit bestimmt der Leser selbst. Er kann diese beliebig verändern und auch stoppen.

Das erfindungsgemäße Verfahren des taktilen Schreibens und Lesens kann mit einigen Erweiterungen auch zum textlichen Skypen eingesetzt werden. Bei diesem können auch mehrere Personen gleichzeitig an der Kommunikation teilnehmen; so auch Taubblinde.

Gehörlose gibt es weltweit mehr als Blinde, wie es auch keine Blinde gibt, die mit Gehörlosen tauschen würden, zumal auch viele Gehörlose auch Sprechprobleme haben. Für diese und andere Personen mit Sprechbehinderung ist das schnelle Schreiben und Lesen mit Kürzeln sehr wichtig. So auch das schnelle Lesen, da mit Gebärdensprache vermittelten Informationen oftmals unzureichend sind.

Beispiel-1: Bei gewissen Anlässen werden Dolmetscher der Gebärdensprache eingesetzt, die nicht erforderlich wären, wenn die gesprochenen Texte mit Spracherkennung umgewandelt und erfindungsgemäß als Kombination aus Volltext und Kurztext zeitgleich ausgegeben würde; idealerweise auf dem Smartphone des Gehörlosen. Bei Großveranstaltungen auf mehreren großen visuellen Displays, mit unterschiedlicher Kürzungsmächtigkeit, damit auch Personen mit geringeren Kürzelkenntnissen den Ausführungen des Sprechers folgen können.

Beispiel-2: Kommunikation eines Gehörlosen mit einem nichtbehinderten Partner.

Der Gehörlose schreibt auf seiner Tastatur mit Kürzeln seinen Text, der auf dem Bildschirm seines Smartphones in Vollschrift ausgegeben wird, sodass der nichtbehinderte Partner den Text lesen kann.

Der Partner antwortet verbal, wobei der Text vom Smartphone des Gehörlosen mit Spracherkennung in Text und danach in dessen Kurzschrift umgewandelt und auf dem Smartphone des Gehörlosen als Kombination von Volltext und Kurztext zum Lesen durch den Gehörlosen ausgegeben wird.

Beispiel-3: Die im Fernsehen ausgegebenen Texte werden dem Gehörlosen so vermittelt, dass sie mit der Spracherkennung des Smartphones des Empfängers umgewandelt und danach dem gehörlosen Empfängers in dessen Kurzschrift ausgegeben werden können.

Gemäß einer weiteren Ausführungsform der Erfindung kann vorgesehen sein, dass zur Eingabe und zur Ausgabe eines lesbaren Textes Zeichen eines Zeichensatzes verwendet werden, wobei die Zeichen über eine Tastatur mit einer Vielzahl von Tasten eingegeben und über die Ausgabeeinheit ausgegeben werden, wobei zwischen Ein- und Ausgabe eine Zwischenspeicherung und/oder Übertragung der Zeichen oder Zeichenkombinationen erfolgt, und dass bei der Zeicheneingabe die Zeichen wahlweise als Volltext oder als Kurztext eingegeben werden, sodass abwechselnd die Eingabe von Volltext- und Kurztext-Abschnitten aufeinanderfolgt, wobei für die Eingabe der Kurztext-Abschnitte Kürzel in Form von Zeichen oder Zeichenkombinationen definiert sind, die über eine zugehörige Zeichenkombination auswählbar sind.

Durch die Verwendung von Kurztextabschnitten in Kombination mit Volltextabschnitten, wobei der Anteil an Kurztextabschnitten im Vergleich zu den Volltextabschnitten vom Anwender je nach Bedarf und Kenntnis der Kürzeldefinitionen frei bestimmbar ist, sodass die Eingabegeschwindigkeit individuell gesteigert werden kann.

Die Ausgabe des kombinierten Textes aus Volltextabschnitten und Kurztextabschnitten kann als Volltext mit Kurztext oder durch Abrufen der Kürzeldefinitionen und durch Umwandlung der Kurztextabschnitte in Volltextabschnitte als Volltext erfolgen.

Gemäß einem weiteren Aspekt der Erfindung kann jeder der Volltext-Abschnitte eines oder mehreres aus Zeichen des Zeichensatzes, Silben, Wörter, Redewendungen, Standardtexte oder textliche Informationen umfassen.

Ferner kann jeder der Kurztext-Abschnitte Kürzel zum Abrufen von gespeicherten Volltexten umfassen.

Gemäß einer weiteren Variante können die eingegebenen Zeichen über eine taktile Reizerzeugungsvorrichtung ausgegeben werden, wobei die in Form von Volltext und Kurztext eingegebenen Zeichen auch als Kombination aus Volltext und Kurztext über die taktile Vorrichtung, z.B. ein Band oder ein Gurt mit einer eingebauten Matrix aus Schwingaktuatoren zur Befestigung am Körper eines Anwenders, ausgegeben werden können.

Dabei können die eingegebenen Zeichen über eine taktile Reizerzeugungsvorrichtung zur Kontrolle oder Korrektur mittels taktiler Ausgabe ausgegeben und gegebenenfalls zusätzlich zwischengespeichert oder der im Volltext und Kurztext vorliegende Text zu einem entfernten Empfänger übertragen werden oder es können die eingegebenen Zeichen über eine taktile Vorrichtung zur Kontrolle oder Korrektur ausgegeben und zusätzlich in Volltext in Sprache konvertiert werden.

Über eine geeignete taktile Reizerzeugungsvorrichtung können an mindestens vier unterschiedlichen Positionen eines menschlichen Körpers Aktuatoren vorgesehen sein, die Zeichen eines Textes in einen körperlichen Reiz umwandeln.

So können die Aktuatoren aus mindestens vier elektrischen Schwingungserzeugern gebildet sein, die in einem Gürtel angeordnet sind und in Kontakt mit dem menschlichen Körper bringbar sind.

Weiters kann in weiterer Ausbildung der Erfindung eine bidirektionale Kommunikation erfolgen, bei der in Volltexteingabe der Tastatur in Sprache konvertiert wird und die verbale Antwort in Volltext und Kurztext ausgegeben wird.

Bei der Ausgabe der Kurztexte können die bei der Eingabe verwendeten Definitionen oder andere Kürzel-Definitionen verwendet werden.

Nachfolgend wird die Erfindung anhand der in den Zeichnungen dargestellten Ausführungsbeispiele ohne Beschränkung der Allgemeinheit des Erfindungsgedankens eingehend erläutert. Es zeigt dabei

Fig. 1A und Fig. 1B schematische Darstellungen von Braille-Matrizen gemäß Stand der Technik;

Fig.1C und Fig. 1D Draufsicht auf Braille-Tastaturen und einer Braille-Zeile gemäß Stand der Technik;

Fig.2A eine schematische Draufsicht auf eine Einhandtastatur gemäß einem Ausführungsbeispiel der Erfindung;

Fig.2B eine schematische Draufsicht auf eine weitere Einhandtastatur gemäß einem weiteren Ausführungsbeispiel der Erfindung;

Fig.2C bis 2J jeweils eine Draufsicht auf bekannte Tastentypen;

Fig.2K und 2L jeweils eine Draufsicht auf bekannte Globaltasten;

Fig.3A1, 3A2 und 3A2b zeigen schematisch Ausführungsformen einer taktilen Ausgabevorrichtung;

Fig.4A1, 4A2, 4A3 zeigen unterschiedliche Hierarchiestrukturen von Zeichensätzen;

(Weiter auf Seite 16 der ursprünglichen Beschreibung)

Fig.5A, 5B, 5C und 5D jeweils eine Draufsicht von clusterförmig angeordneten Tasten mit daneben angeordneten Darstellungen von Tastenkombinationen;

Fig.5E, 5F, 5G jeweils eine Draufsicht auf Dreifingertastaturen mit daneben angeordneten Darstellungen von Tastenkombinationen;

Fig.5H eine Draufsicht einer auf einem Unterarm fixierten Dreifingertastatur gemäß Fig.5G.;

Fig.5I und 5J eine Draufsicht einer weiteren Tastaturausführungsform;

Fig.5K und 5L zeigen eine Draufsicht auf eine weitere Ausführungsform einer Tastatur;

Fig.5M, 5N und 5O zeigen eine Draufsicht auf eine weitere Ausführungsform einer Tastatur;

Fig.6A, 6B, 6C und 6D zeigen schematische Ansichten weiterer Tastaturen;

Fig.7A eine schematische Darstellung einer weiteren Ausführungsform einer taktilen Vorrichtung;

Fig.8 eine schematische Draufsicht auf eine Ausführungsform einer erfindungsgemäßen Tastatur;

Fig.9 eine Darstellung der Tastenbelegungen für die Tastatur gemäß Fig.8;

Fig.10C eine schematische Draufsicht auf eine Ausführungsform einer erfindungsgemäßen Tastatur und

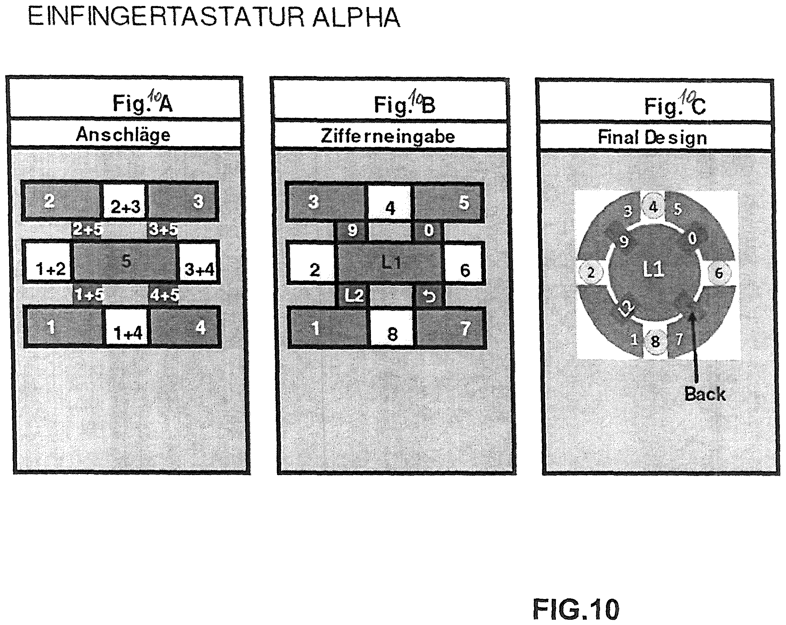

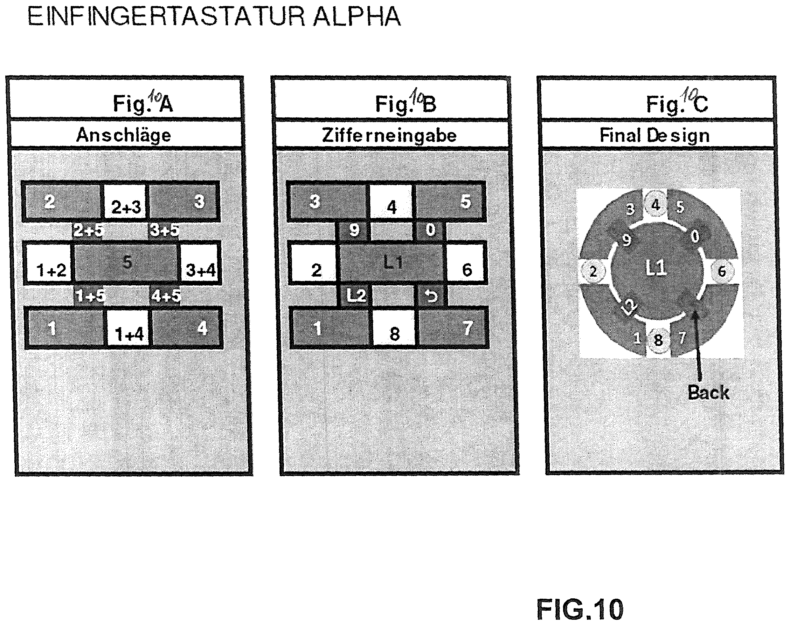

Fig.10A und 10B eine Darstellung der Tastenbelegungen für die Tastatur gemäß Fig.10C.

Die Erfindung betrifft neuartige Vorrichtungen und Verfahren des maschinellen Schreibens und virtuellen Lesens flüchtiger taktiler Zeichen und akustischer Laute. Die erfindungsgemäßen Vorrichtungen und Verfahren können eigenständig, gemeinsam und auch bei beliebigen anderen Geräten eingesetzt werden.

Das neuartige Schreiben: Die Vorrichtungen sind Einhandtastaturen (ET), damit die freie zweite Hand für andere Zwecke eingesetzt werden kann. Die ETs können (i), zum Schreiben alphanumerischer Zeichen, (ii), zum Schreiben von Ziffern, zum numerischen Abruf alphanumerischer Zeichen, Wörter und anderer textliche Einheiten und (iii), als Hybridtastaturen zum Schreiben beider Modi (i) und (ii) eingesetzt werden; außerdem (iv), für diverse Zwecke, wie z.B. als Konsolen zum Bedienen fremder Geräte oder Musizieren. Die ET sind Klein- und Kleinsttastaturen, die blind bedient werden können.

Die Texte können wahlweise in Volltext und in Kurztext geschrieben und so ausgegeben werden oder z.B. zur Ausgabe vorher in Volltext umgewandelt werden, wobei die im Kurztext enthaltenen Kürzel als Codes zum Abrufen gespeicherter textlicher Informationen eingesetzt werden.

Die Zeichen können vor allem mit Akkord- und Kombinationsanschlägen geschrieben werden, um die Tastenanzahl zu minimieren, die Fingerwege kurz zu halten und das einfache Blindschreiben ermöglichen zu können. Zur Unterstützung der Eingaben kann auch von mehreren optionalen Schreiberleichterungen Gebrauch gemacht werden.

Das virtuelle Lesen: Die geschriebenen oder eingescannten Zeichen, Wörter und beliebigen anderen textlichen Einheiten durchlaufen eine hierarchische Struktur, bei der auf jeder Hierarchiestufe Teilinformationen der Eingabe mit flüchtigen Reizen bzw. Lauten sequentiell an den Anwender z.B. taktil ausgegeben werden. Der Anwender weiß daher bereits beim Schreiben, welche textliche Einheit er eingegeben hat und so auch, wie diese nach Durchlaufen der Hierarchie als virtuelles Pendant ausgegeben werden wird. Trifft die Erwartung nicht ein, so war die Eingabe fehlerhaft.

Das virtuelle Lesen kann zur Selbstkontrolle der geschriebenen Zeichen, zum Lesen beliebiger fremder Texte, zum schriftlichen Kommunizieren mit anderen Personen und auch zum automatischen Empfang wichtiger Mitteilungen eingesetzt werden. Das gleiche Ausgabeverfahren kann auch zum manuellen Abruf von Messergebnissen bei selbsttätigen und bedienbaren Geräten eingesetzt werden.

Das virtuelle Lesen ersetzt die Blindenschrift und vielleicht auch den Bildschirm. Da geschriebene Codes auch als solche gelesen werden können, kann die hohe Schreib- und Lesegeschwindigkeit wiederum erreicht werden, die die Handstenographie vor über hundert Jahren geboten hat; mit dem Vorteil, dass die Zeichen nun maschinell geschrieben und als digitale Einheiten kopiert, erweitert und schon bei der Eingabe kontrolliert werden können.

Das maschinelle Schreiben dominiert seit vielen Jahren, weil die Handschrift anstrengend ist, oft schlecht lesbar und auch nicht digitalisiert ist. Es gibt aber dennoch viele, insbesondere ältere Menschen, die aus unterschiedlichen Gründen vom Maschinschreiben keinen Gebrauch machen oder machen können, wie auch der Trend in Richtung kleiner, mobil ersetzbarer Schreibgeräte geht, der das Schreiben auf der konventionellen PC-Tastatur und so auch das effiziente Blindschreiben verringert.

Einhandtastaturen haben den Vorteil, dass die freie zweite Hand für andere Zwecke eingesetzt werden kann. Diese gibt es schon seit langem, doch konnten sie sich bisher nicht durchsetzen, sodass sie meist von Personen mit Schreibbehinderung eingesetzt werden. Stenographiemaschinen gibt es in einigen Ländern, wie z.B. das US-CAT-System. Diese werden nur von professionellen Schreibern eingesetzt.

Blinde, stark sehbehinderte und taubblinde Menschen, nachstehend zusammenfassend Blinde genannt, sind meist sehr gute Schreiber auf dem PC und den Brailletastaturen, so sie die Blindenschrift Braille beherrschen, was jedoch nur wenige können.

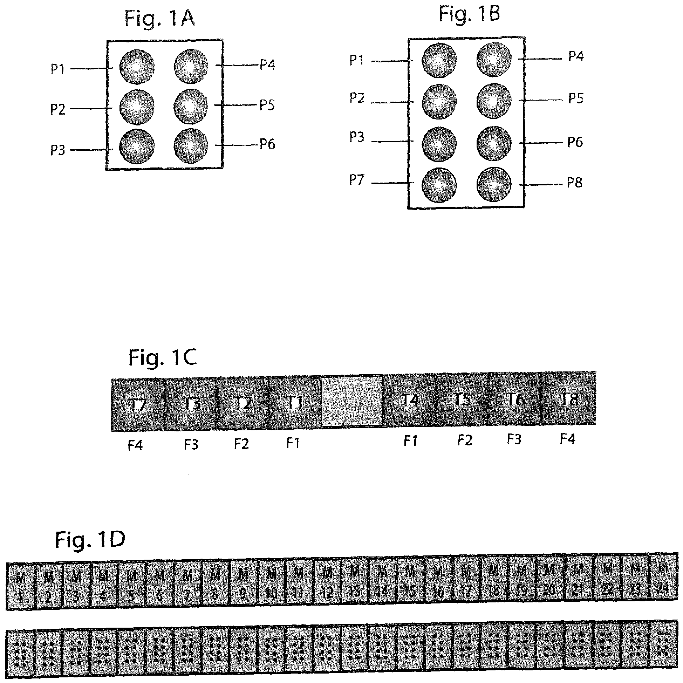

Die von Louis Braille (1809-1852) erfundene Blindenschrift ist die einzige weltweit eingesetzte. Sie hat Blinden den Zugang zu schriftlichen Informationen ermöglicht. Die Zeichen werden auf einer Matrize mit 6 oder 8 Punkten dargestellt. Die Punkte haben einen Durchmesser von ca. 1,2 mm. Die Distanzen zwischen den Punkten betragen 2,5 mm, die Distanz von Matrize zu Matrize 3,5 mm. Mit 6 Punkt-Braille (Fig.1A) können 64 und mit 8-Punkt-Braille (Fig. 1B) 256 Punktkombinationen dargestellt werden.

Beim Lesen überstreicht der Lesefinger berührend die dargestellten Punkte.

Die Tasten der Brailletastaturen sind horizontal angeordnet, wobei für jeden Finger ein Taste vorgesehen ist. Gemäß der Skizze (Fig. 1C) werden die 4 Punkte (T7-T3-T2-T1) mit den Fingern der linken Hand und die 4 Punkte (T4-T5-T6-T8) mit den Fingern der rechten Hand im Akkord bedient. Bei den mechanischen Tastaturen werden die Punkte in die Rückseite des Braillepapiers mit Tastendruck eingestanzt.

Elektronischen Braille-Organizer haben meist auch taktile Displays (Braillezeilen) zum Kontrolllesen mit dem Finger. Die Skizze (Fig. 1D) zeigt 24 aneinandergereihte Braille-Module (M1-M24) auf einer Braillezeile. Die Punkte können piezo-elektrisch angehoben und abgesenkt werden. Große Braillezeilen habe 80, die Braille-Organizer meist 20-22 Module.

Es gibt PCs, die mit einer Sprachausgabe, einem Brailledisplay (mit 80 Modulen), einem Braille-Drucker und einer Bildschirmauslesesoftware zum Bedienen der Computermaus ausgestattet sind. Diese Ausstattungen sind teuer, werden beim beruflichen Einsatz jedoch behördlich gefördert.

Der Einsatz von Braille ist seit langem rückläufig, sodass die Schrift jetzt nur mehr von 5% aller Blinden eingesetzt wird. Angesichts dessen wurde auf der UNESCO-Konferenz in Paris 2009, anlässlich des 200. Geburtstags von Louis Braille, mit 500 Teilnehmern aus aller Welt, die Parole ausgegeben, Braille noch mehr als bisher zu fördern, da bei den Blinden die Gefahr des Analphabetismus besteht, den künstliche Sprachausgaben nicht verhindern können. Eine Trendwende ist trotz dieser Maßnahme nicht eingetreten.

Die von William Moon (1818-1894) erfundene Schrift wird in einigen Commonwealth-Ländern eingesetzt. Die Zeichen sind den handgeschrieben Zeichen der Sehenden angepasst und daher haptisch leichter erkennbar als Braille. Die Moon- Zeichen werden mit Brailledruckern ausgedruckt.

Die meisten Blinden kennen die alphanumerischen Zeichen der Sehenden, die sie auch mit den Fingern wahrnehmen und lesen können, wenn die erhabenen Linien punktiert dargestellt werden.

Bei der von Hieronymus Lorm (1821-1912) erfundenen Taubblindenschrift "Lormen" werden die Zeichen mit dem Finger des Schreibers in die Hand des Taubblinden gestrichen und getippt. Diese Informationsvermittlung ist äußerst aufwendig und rückschrittlich. Alle bisherigen Versuche, für die Lormen eine zeitgerechte Problemlösung zu finden, waren bisher erfolglos.

Die vorliegende Erfindung befasst sich mit dem barrierefreien Schreiben und Lesen, die bei Blinden nur mit taktilen Vorrichtungen und Verfahren erreicht werden kann. Da alle Menschen über ein haptisches Wahrnehmungsvermögen verfügen, sind unsere Erfindungen nicht auf die Minderheit der Blinden, sondern auf den großen universellen Einsatz ausgelegt, der auch möglichst viele Behinderte inkludiert.

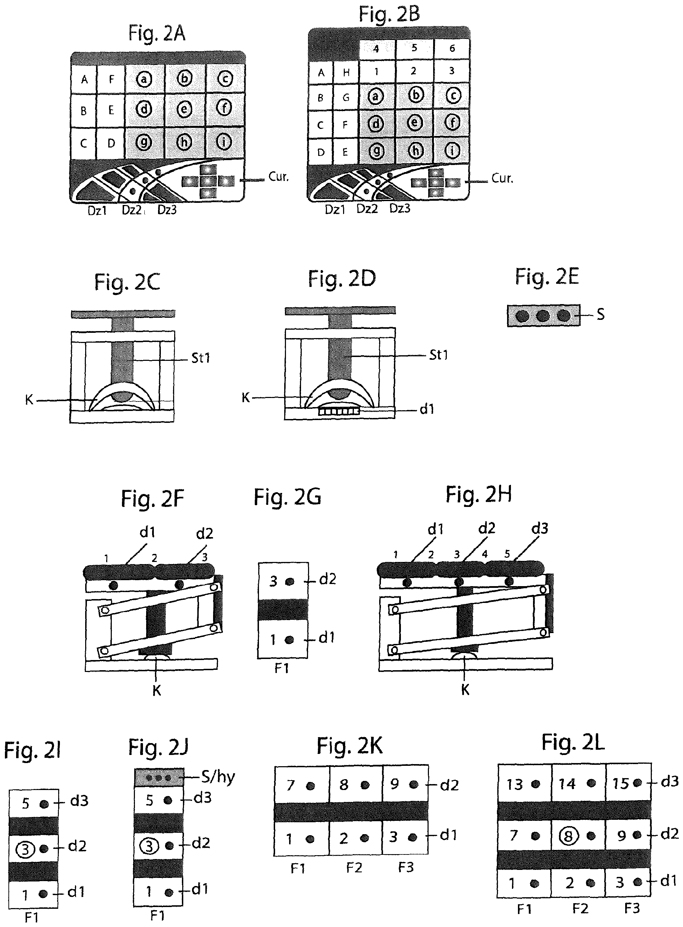

Bei den neuen Einhand-Tastaturen sind ergänzend zu den Einzeltastenanschlägen auch Akkord- und Kombinationsanschläge vorgesehen. Fig. 2A zeigt eine derartige Akkordtastatur für die drei mittleren Finger einer Hand, auf der auch zeilenüberschreitende Anschläge ausgeführt werden können, wie z.B. der gleichzeitige Anschlag der Tasten (d+b) mit dem Zeigeund Ringfinger.

Der Daumen ist der beweglichste und stärkste Finger der Hand. Bei den PC-Tastaturen werden die Daumen beim Blindschreiben zum Schreiben des Leerzeichen eingesetzt, sodass das große Potential der Daumen nicht ausgenützt werden kann. Bei den EinhandTastaturen kann mit dem Daumen eine weite Schwenkbewegung ausgeführt werden. Dabei kann der Daumen eine große Fläche auf der bogenförmige Daumenzeilen (Dz) abdecken, auf denen mehrere Tasten befinden können. Der Daumen kann auch Umschaltanschläge und Akkordanschläge gemeinsam mit anderen Tastenanschlägen ausführen.

Die Tastatur gemäß Fig. 2A ist eine alphanumerische Tastatur (ETA) auf der alphanumerische Zeichen geschrieben werden können.

Fig. 2B zeigt eine Hybridtastatur (ETY), auf der auch alphanumerische numerische Zeichen gemeinsam geschrieben werden können. So kann beispielsweise mit [a+1] das Wort "aber", und mit [a+2] das Wort "außerdem" geschrieben werden kann.

Erfindungsgemäß sind somit den Tastenkombinationen a+1 und a+2 Kürzel zugeordnet, über welche Wörter, Textpassagen, etc. abgerufen werden können.

UNTERSTÜTZUNGSTASTEN: Das sind Tasten, wie z.B. die Tasten (ABCDEF) der Tastatur (Fig. 2A), die einzeln und in Kombination eingesetzt werden können.

JOKER-TASTEN: Das sind Tasten (nicht dargestellt), die funktions- und programmabhängig für mehrere Zwecke eingesetzt werden können.

KONVENTIONELLE HUBTASTEN (Ht): Die Hubtasten sind die üblichen Einzeltasten, die unterschiedlich ausgeführt werden können. Die (Fig. 2C) zeigt einen "Klick-Key" (K), der den Stempel (St1) nach oben drückt.

SPEZIELLE HUBTASTEN (Hs): Das sind spezielle Hubtasten (Hs), mit denen mit Variieren des Anschlags zwei oder mehr verschiedene Zeichen geschrieben werden können. Fig. 2D zeigt eine spezielle Hubtaste (Hs), die ebenfalls mit einem "Klick- Key" (K) ausgestattet ist. Sie hat am unteren Ende des Stempels (St1) einen Drucksensor (d1). Demgemäß können die Zeichen mit normalen Anschlägen und andere Zeichen mit längerem Tastendruck geschrieben werden.

SENSORTASTEN (S): Das sind kapazitive Sensoren, die beim Berühren aktiviert werden wie z.B. bei den Touchscreens. Die Tastaturen der Fig. 2E und Fig. 2J zeigen derartige Sensortasten mit drei Punkten. Sie sind in beiden Fällen mit (S/hy) gekennzeichnet, weil sie in Kombination mit der benachbarten Hubtaste (ht) auch als Hybridtaste (hy) eingesetzt werden können.

HYBRIDTASTEN (hy): Die Hybridtasten (hy) sind Kombinationen von konventionellen Hubtasten (Ht) und Sensortasten (S). Zuerst wird die höher gelegene Hubtaste erst mit fortgesetztem Druck, sodann die Sensortaste (S) gedrückt. Beispiel: Die Skizze der (Fig. 4C) zeigt in der mittleren Kolonne die Buchstaben "a-c". Die benachbarte Sensortaste (S) kann alleinstehend gedrückt werden. Werden zunächst die Tasten "a" und anschließend die Taste (S) gedrückt, so ist das der Hybridanschlag (hy).

ET-SAMMELTASTEN: Das sind längliche Tasten mit Drucksensoren, die den Vorteil haben, dass ihre vertikale Länge kürzer ausgeführt sein kann.

SAMMELTASTE MIT DREI ZEILEN: Die (Fig. 2F) zeigt eine Sammeltaste mit zwei Drucksensoren (d1, d2) von der Seite gesehen, von oben gesehen (Fig. 2G). Ist der Druck auf (d1) der Größte, so ist das ein Anschlag auf der Zeile (1), ist der gemessene Druck beim Drucksensor (d2) der Größte, ist das ein Anschlag auf der dritten Zeile (3); verteilt sich der Druck gleichmäßig, ist das ein Anschlag der virtuellen Zeile (2).

TASTEN MIT FÜNF ZEILEN (Fig. 2H und Fig. 2I): Wie bei den Sammeltasten, jedoch mit 5 Anschlägen. Bei der Version (Fig. 2J) mit 7 Anschlägen.

ET-GLOBALTASTEN: Die Skizze (Fig. 2K) zeigt die Globaltaste von oben für die drei mittleren Finger der Hand (F1-F2-F3) mit drei Zeilen. Die Skizze (Fig. 2L) zeigt eine Globaltaste mit fünf Zeilen. Globaltasten sind schwerer als Einzeltasten, sodass Hebel vorgesehen sind. Die Tasten der Globaltasten können auch horizontal (im Akkord), mit gleichzeitigem Druck auf mehrere Tasten geschrieben werden.

Die Einhandtastaturen der vorliegenden Erfindung sind alphanumerische Tastaturen (ETA) und numerische Tastaturen (ETN), wie auch Hybridtastaturen (ETY) als Kombination der ETA und ETN-Tastaturen. Außerdem auch Tastaturen für diverse Zwecke (ED) .

DIE ALPHABETISCHEN TASTATUREN ETA: Das sind alphanumerischen Kleinsttasten, die mit einem Finger bedient werden (ETA1) können, alphanumerische Dreifingertastaturen (ETA2), die mit Akkordtastaturen bedient werden und Tastaturen im Taschenformat zum Bedienen mit einem Finger (ETA3).

EINFINGERTASTATUREN ETA1: Das sind clusterförmig oder linear angeordnete Kleinsttastaturen, bei denen auch benachbarte Tasten gleichzeitig mit einem Finger angeschlagen (gedrückt) werden können. Auf ihnen können nur wenige Anschläge ausgeführt werden, doch können diese mit Umschaltanschläge und Einsatz von Unterstützungs- und Unterstützungs- und Daumentasten erweitert werden. D.h., dass sie alle Zeichen des Zeichensatzes vor allem dann abdecken können, wenn pro Zeichen zwei Anschläge vorgesehen sind. Ihr Vorteil ist, dass sie sehr klein ausgeführt und am Unterarm wie Armbanduhren fixiert und dabei mit einem Finger der anderen Hand bedient werden können.

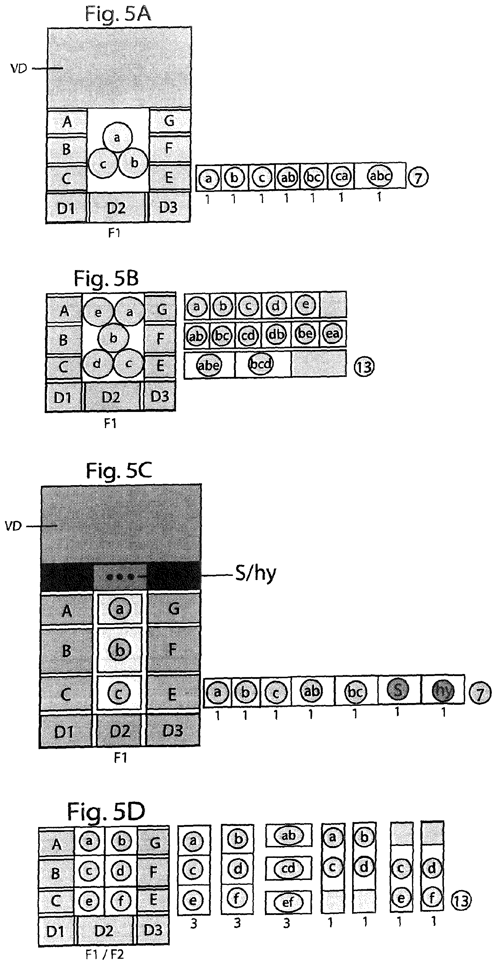

CLUSTERFÖRMIG ANGEORDNETE TASTEN: Die Tastaturen (Fig. 5A) und (5B) sind Beispiele clusterförmig angeordneter Zeichentasten. Links, rechts und unterhalb befinden sich Unterstützungstasten und die Daumentasten (D1-D3). Die Tastatur (Fig. 5A) ermöglicht 7 Anschläge, die Tastatur (Fig. 5B) 13 Anschläge.

LINEAR ANGEORDNETEN TASTE: Bei den Tastarturen(Fig. 5C) und (Fig. 5D) sind die Zeichentasten vertikal angeordnet. Auf der Tastatur (Fig. 5C) können 7 Anschläge ausgeführt werden, da die Sensortaste (S) in Kombination mit der Zeichentaste "a" auch als Hybridtaste angeschlagen werden kann. Die Tastatur (Fig. 5D) hat zwei vertikale Kolonnen, die mit Zeige- und Mittelfinger, wie auch mit Zeigefinger allein bedient werden können.

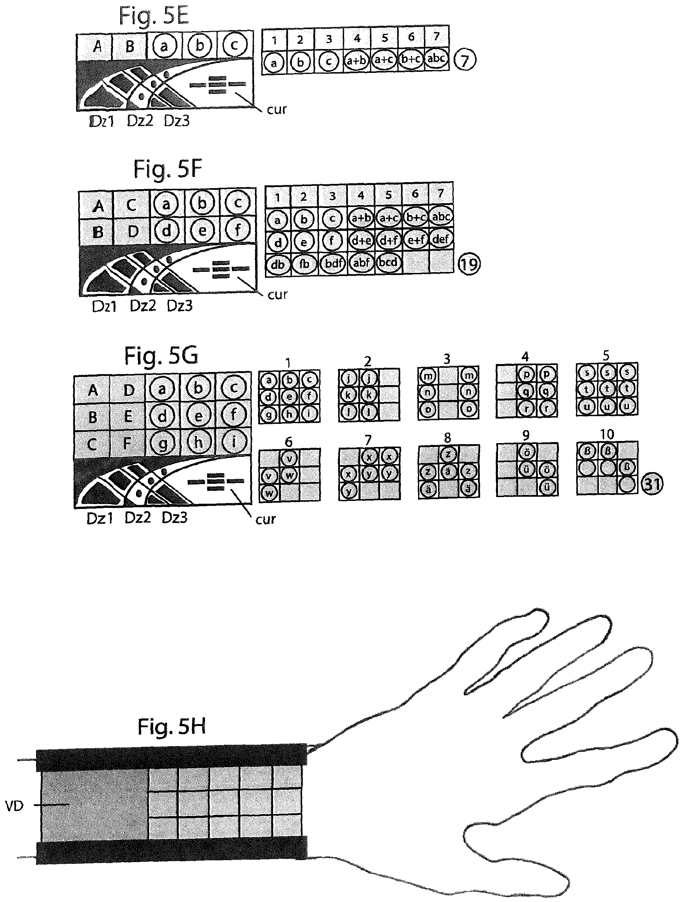

DREIFINGERTASTUREN ETA2: Bei diesen werden die Tasten mit Akkordanschlägen der drei mittleren Fingern geschrieben; so auch zeilenüberschreitend. Diese Tastaturen sind zwar größere als die ETA1-Tastaturen aber dennoch klein. Da jeder Finger nur eine Taste anschlägt, ist der Kraftaufwand beim Schreiben geringer als bei den Einfingertastaturen (4,11). Sie bieten auch wesentlich mehr Anschlagsmöglichkeiten als die Tastaturen ETA1 und können daher auch alle Zeichen des Zeichensatzes abdecken. Mit den Tastaturen gemäß Fig. 5E können 7, gemäß (Fig. 5F) 19 und gemäß (Fig. 5G), 31 Zeichen geschrieben werden; die Tastatur (Fig. 5H) zeigt Tastatur (Fig. 5G) auf dem Unterarm fixiert. DIE TASTATUREN ETA3: Auf diesen Tastaturen können Tasten Einzeloder Kombinationsanschlägen mit einem Finger oder dem Daumens geschrieben werden. Sie sind gemäß ihrer Form mit den Smartphones vergleichbar. Ihre Tasten sind ring- oder kettenförmig aneinandergereiht, sodass benachbarte Tasten in Kombination angeschlagen werden können.

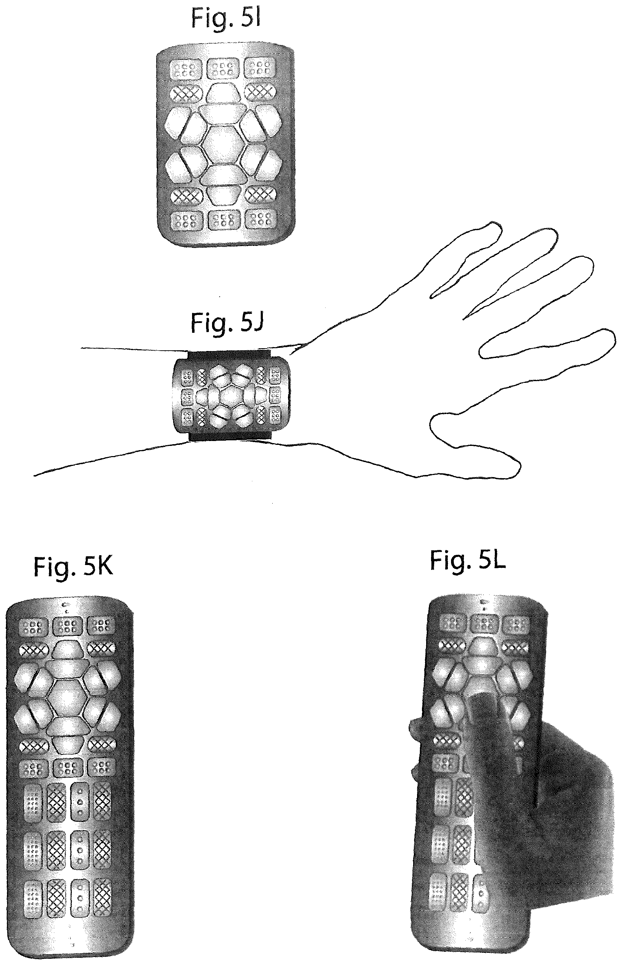

JONNY-TASTATUR: Auf dieser können gemäß Skizze (Fig. 5I) 73 Einzel- und Kombinationsanschläge ausgeführt werden. Sie decken damit den Zeichensatz nicht ganz ab, doch können auch bei dieser von Erweiterungsmöglichkeiten Gebrauch gemacht werden. Skizze (Fig. 5J) zeigt die Tastatur, am Unterarm fixiert.

GEMEINSCHAFTSTASTATUR: Die Skizzen gemäß (Fig. 5K) zeigen die Gemeinschafts-tastatur Jonny-John, die auch mit dem Daumen ausgeführt werden kann (Fig. 5L), ähnlich wie bei einigen Handys. Die Anschläge sind Einfachanschläge, während auf den Handy- Tastaturen im Durchschnitt 2,4 Anschläge pro Zeichen ausgeführt werden müssen. Die Anschläge auf der Jonny-Tastatur (A) werden die Anschläge wie bei (Fig. 5I) geschrieben werden, während auf der John-Tastatur (C) sind Akkordanschläge mit den drei mittleren Fingern der Hand. Der Vorteil der Gemeinschaftstastatur besteht darin, dass ihre Kapazität jeweils der Tastatur zugeordnet wird, die gerade aktiviert ist; ein weiterer Vorteil, der das Abdecken des Zeichensatzes ermöglicht.

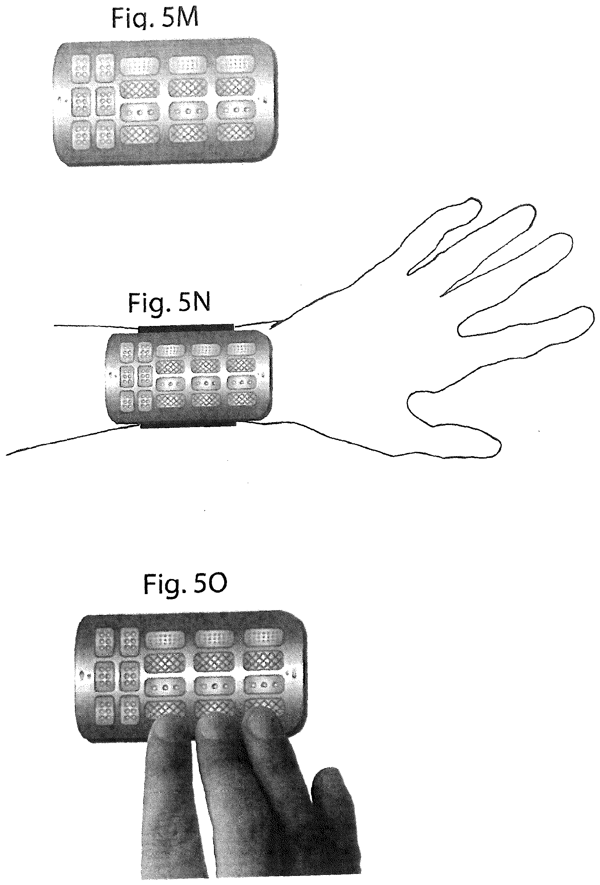

DIE JOHN-TASTATUR: Die Skizzen gemäß (Fig. 5M, 5N, 5O) zeigen die John-Tastatur, auf der die Zeichen mit den drei mittleren Finger der Hand bedient werden. Die Skizze (Fig. 5N) zeigt die Tastatur am Unterarm fixiert; die Skizze (Fig. 5O) zeigt die Zehnertastatur mit vier Zeilen und drei Kolonnen und Bedientasten.

Die Tastatur ETN sind numerische Kleinsttastaturen, auf denen mit zweistelligen Ziffern Zeichen, Silben, Wörter und beliebige andere textliche Einheiten abgerufen werden können.

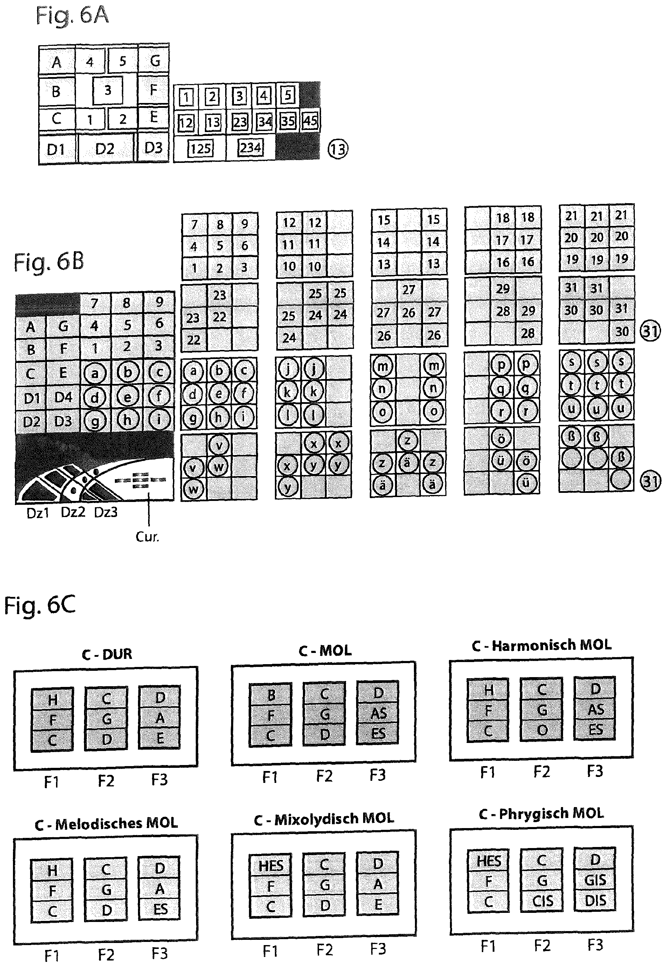

Die Skizze gemäß (Fig. 6A) zeigt eine Kleinstversion der ETN-Tastatur, die mit der alphabetischen Tastatur gemäß (Fig. 5B) vergleichbar ist. Auf der Tastatur werden jedoch 13 Ziffern geschrieben; mit zweifachem Anschlag 169 (13x13). Sie decken damit den Zeichensatz zur Gänze ab. Die Abrufe mit Ausgaben erfolgen automatisch nach dem zweiten Anschlag. Der erste Anschlag, der zweite Anschlag, wie auch beide Anschläge können auch mit Umschaltanschläge erweitert werden.

VOR- UND NACHTEILE DER ETN-TASTATUREN: Die Zeichen werden mit zweifachem Anschlag aufgerufen, wobei das Erlernen der Nummern, mit denen die Zeichen aufgerufen werden, sehr einfach ist. Da Tasten können auch sehr klein ausgeführt und alle Anschläge auf einer einzigen zentralen Stelle mit kurzen Fingerwegen sehr schnell blind ausgeführt werden. Diese Vorteile können die Nachteil des Zweifachanschlages ausgeglichen und in Vorteile vor allem dann umwandeln, wenn sie zur Eingabe von Codes ausgenützt werden.

DIE HYBRIDTASTATUREN ETY

Die (Fig. 6B) zeigt eine ETY-Tastatur mit drei Zeilen und drei Kolonnen, wobei die alphabetische Einheit mit der Tastatur (Fig. 5G) vergleichbar ist. Auf beiden können 31 Zeichen im Akkord geschrieben werden.

Die beiden Tastaturen können einzeln, wie auch in Kombination eingesetzt werden. Die Kombination ermöglicht eine enorme Erweiterung der Anschlagsmöglichkeiten; bei Kombinationen von Buchstaben und numerischen Zeichen sind es 961 (31x31).

DIVERSE ETD-TASTATUREN: Die ETD-Tastaturen sind Tastaturen, die für diverse Zwecke eingesetzt werden können, wie z.B. als Fernbedienung, Konsole zum Bedienen und Steuern anderer Geräte und Spiele, Ausgabe von Musik u.dgl.

ET-MUSIKTASTATUREN: Die Skizze gemäß (Fig. 6C) ist zeigt eine Musiktastatur, die gemäß den Abbildungen eingestellt werden kann. Die Tasten können auf der Tastatur mit einzelnen Fingern, mit Fingerkombinationen, wie auch im Akkord, mit mehreren Fingern gleichzeitig angeschlagen werden. Die Tastatur hat drei Zeilen und drei Kolonnen, kann aber auch mit 4 Zeilen und 4 Kolonnen ausgestattet sein; z.B. bei Tonleitern mit erhöhten Halbtonschritten. Die Oktave kann unter Miteinsatz des Daumens erhöht oder erniedrigt werden.

Das ideale Schreiben sollte mit möglichst geringem physischem Aufwand, ergonomisch vorteilhaft mit einer Hand blind ausführbar sein. Die Tastaturen sollten klein sein, damit sie beim Schreiben gemäß den Präferenzen der Schreibers platziert werden können. Am vorteilhaftesten sind Einhandtastaturen, da die freie zweite Hand für andere Zwecke eingesetzt werden kann. All das sollte das einfache Blindschreiben ermöglichen und die Rückkehr zum "Adlerprinzip" verhindern, bei dem mit angestrengten Augen und hoher Konzentration die Tasten mit weiten Fingerwegen angepeilt und angeschlagen werden.

Die Basis unserer ET-Tastaturen ist die Vollschrift, doch ist es vorteilhaft, wenn die Wörter mit Kürzel geschrieben und automatisch in Volltext umgewandelt werden, bzw. Codes zum Abruf und zur fehlerfreien Ausgabe von gespeicherten Texten eingegeben werden.

GETRENNTE ZEICHENSÄTZE: Die häufig verwendeten (primären) Zeichen des deutschen Zeichensatzes decken 80% des Buchstabenbedarfes ab, die 28 selten verwendeten (sekundären) nur 20%. Angesichts dessen besteht die Möglichkeit, die Tasten der Tastatur auf die Primärzeichen zu beschränken und für die Sekundärzeichen Alternativ- und Ersatzanschläge unter Einsatz der Primärzeichen vorzusehen.

ZWEIFACHANSCHLÄGE PRO ZEICHEN: Eine Reduzierung des Zeichensatzes bietet sich auch die Möglichkeit die Zeichen mit zwei (oder mehr) Anschlägen zu schreiben; siehe Einsatz der numerischen Tastaturen ETN (4.2).

Gemäß Wikipedia decken die 207 am häufigsten verwendeten Wörter (mit bis zu 5 Buchstaben) die Hälfte aller Wörter ab. Es lohnt sich daher, auch für kurze, häufig verwendete Wörter Kürzel vorzusehen. Z.B. zx = zurück, xk= Rückkehr, .lieh = pünktlich, usw.

DIVERSE SCHREIBERLEICHTERUNGEN:

Umwandlung von Klein- in Großbuchstaben nach einem Punkt, sofern möglich;

Automatische Umwandlung bei Endungen "-ung", "-keit", ,,-heil", "-schaff";

Nachträgliche Umwandlung des Anfangsbuchstaben mit spezieller Taste (tx):

```
„Österreichisch“ + (tx) = österreichisch;
```

```
„umwandeln“ + (tx) = Umwandeln;
```

```
Alle Zeichen in Großbuchstaben „Wien“ + (txx) = „WIEN“;
```

B1: Automatisches Schreiben von [β] mit zwei [ss]: [Gruss > Gruß];

Schreiben von [ß] zum Schreiben von [sch]: [ßule>Schule];

Automatische Umwandungen von Umlauten: [a-o-u] in [ä-ö-ü]. Bei Ausnahmen, wie mochte-möchte oder durfte-dürfte werden beide Varianten zur Auswahl dargestellt.

Automatische Ergänzung des [u] bei [qu]; [qer] > [quer];

Ersatzzeichen für j [ii > j]; Ersatzzeichen für [qu]; [kwelle] > [Quelle].

Eliminieren des Buchstabes "e" der 16.6% des Zeichenbedarfes abdeckt. Er schwingt bei den Konsonanten akustisch mit Ibe/ce/de/ef/ge/je/el/em/en/pe/que/er/es/te/we/, sodass er automatisch ergänzt werden kann; z.B.; ghn =gehen.

TEXTLICHE BEDIENOBERFLÄCHE: Bei den ET-Tastaturen sind textliche Bedienoberflächen zum textlichen Aufruf von Programmen und Funktionen (mit mnemonischen Codes) vorgesehen, um die umständlichen Funktionen der Computermaus und den übertriebenen Einsatz von "gestures" zu vermeiden, die von vielen Blinden nicht eingesetzt werden können.

AUTOKORREKTUR GESCHRIEBENER WÖRTER: Auch für die ET-Tastaturen sind Autokorrekturen vorgesehen.

Die eingegebenen oder eingescannten realen Einheiten durchlaufen eine hierarchische Struktur, bei der auf jeder Hierarchiestufe eine Teilinformation der taktilen Einheit in sequentieller Folge mit Reizen, bzw. Lauten ausgegeben werden. Zuerst die Zeichengruppe zu der das Zeichen gehört, danach der Zeichenblock, in dem das Zeichen untergebracht ist und zuletzt die Position des Zeichens innerhalb des Zeichenblocks. Mit dieser sequentiellen Teilinformation wird dem Empfänger die Gesamtinformation der Zeichen virtuell vermittelt.

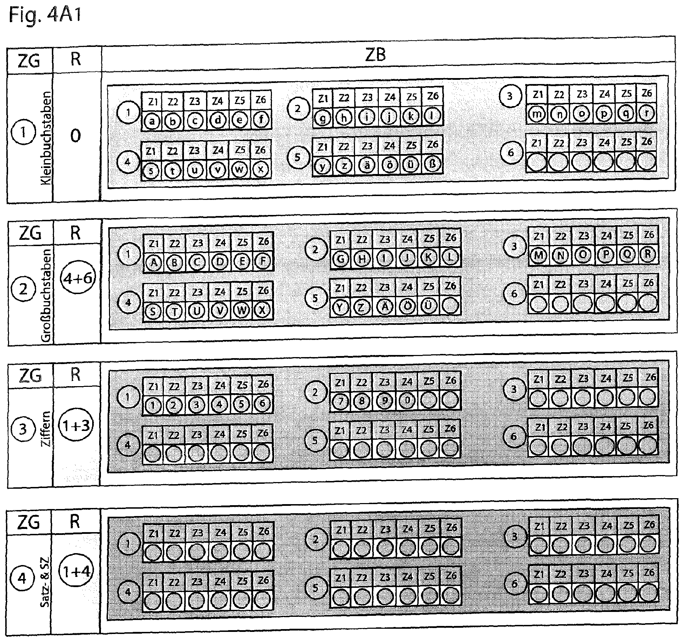

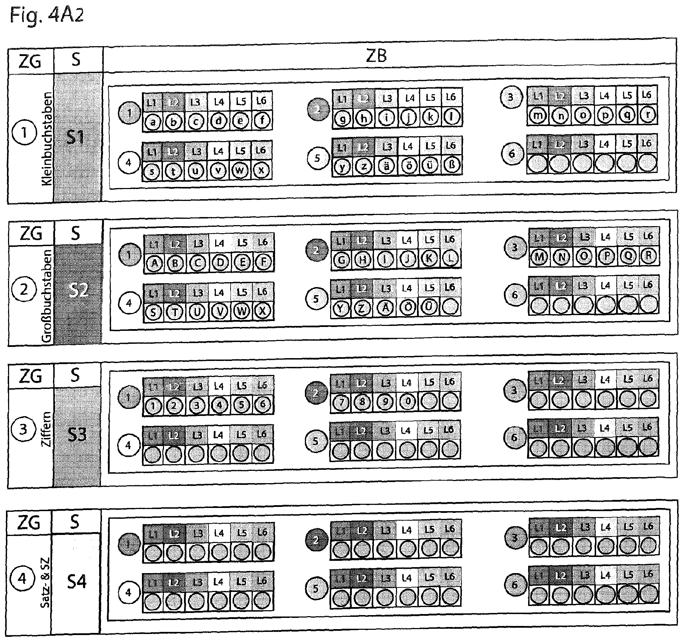

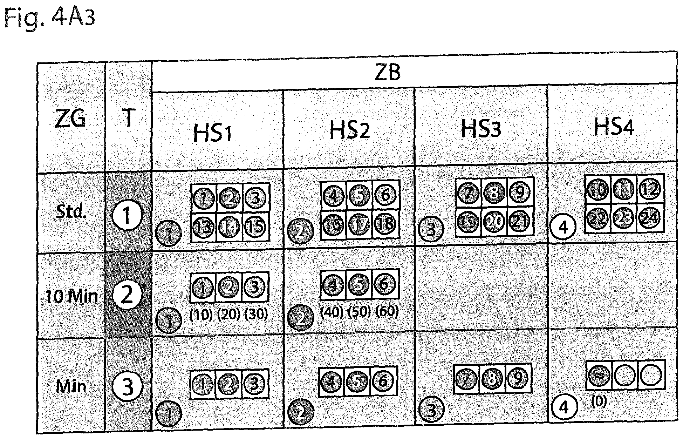

Die Tabelle von (Fig. 4A1) zeigt die hierarchische Struktur der taktilen Zeichen des Zeichensatzes, ohne auf alle Details genau einzugehen.

HIERARCHIE-1: Das sind die Zeichengruppen (ZG) des Zeichensatzes der jeweiligen Sprache: Die Kleinbuchstaben (1), Großbuchstaben (2), Ziffern (3) und die Satz- und Sonderzeichen (4).

Die zweite Kolonne (R) zeigt an, mit welchen Reizen (R) dem Empfänger die Zeichengruppen (ZG) angekündigt werden sollen: Die Großbuchstaben mit den gleichzeitigen Reizen (4+6); die Ziffern mit den gleichzeitigen Reizen (1+3) und die Satz- und Sonderzeichen mit den gleichzeitigen Reizen (1+4): Bei den am häufigsten verwendeten Kleinbuchstaben ist keine Ankündigung erforderlich.

HIERARCHIE-2: Das sind die Zeichenblöcke (ZB) der Zeichengruppen.

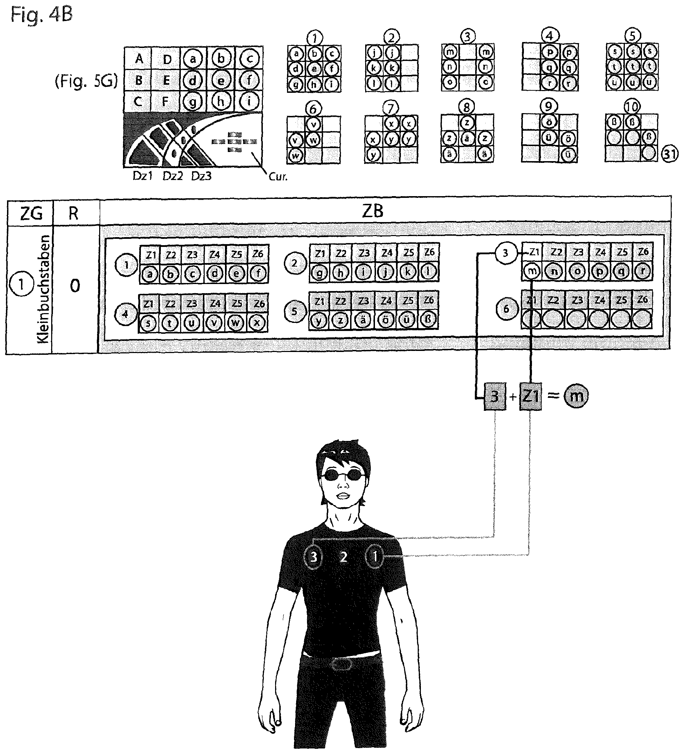

In jeder Zeichengruppe befinden sich 6 Zeichenblöcke, in denen sich wiederum 6 Zeichen befinden. Die Skizze (Fig. 4B) zeigt beispielsweise, dass beim Schreiben des Kleinbuchstabens "m" mit Akkordanschlag keine Ankündigung (0) der Zeichengruppe (ZG) erforderlich ist, sodass die erste Teilinformation der Reiz-3 des Zeichenblocks (ZB) ist.

HIERARCHIE-3: Das sind die Zeichen (Z) die sich in den Zeichenblöcken befinden. Skizze (Fig. 4B) zeigt, dass sich der Kleinbuchstabe "m" in der ersten Position des Zeichen- blocks-3 befindet. Die zweite Teilinformation ist daher der Reiz-1 des Zeichens. Das Zeichen "m" setzt sich daher aus dem sequentiellen ausgegebenen Reiz-3 (des Reizkörpers- 3) und Reiz-1 (des Reizkörpers-1) zusammen.

ÜBERHIERARCHIEN: Der Hierarchie-1-3 können auch Überhierarchien vorgelagert sein, wie z.B. Codes zum Aufrufen von Wörtern, Schlüsselwörtern (key-words) oder persönliche Informationen.

Die Tabelle von (Fig. 4A2) zeigt die hierarchische Struktur der akustischen Zeichen des Zeichensatzes, ohne auf alle Details genau einzugehen.

Die Hierarchie wurde an die der taktilen Zeichen angepasst, wobei lediglich die gewählten Farben die Laute symbolisieren, wobei jedoch zu berücksichtigen ist, dass bei den akustischen Zeichen zahlreiche andere Unterteilungen gewählt werden können.

Die Kolonne (S) weist darauf hin, dass für die Ankündigungen der Zeichengruppen die gleichen Laute, jedoch mit anderen Tonhöhen gewählt werden können.

ÜBERHIERARCHIEN: Mit akustischen Ausgaben bieten sich beinahe unbegrenzte Möglichkeiten der Erweiterung bei den textlichen Eingaben an.

Die Reize (R) werden mit künstlichen Reizkörpern (RK) ausgegeben. Mehrere dieser kommen dabei in Betracht, gegebenenfalls auch kutane oder subkutane Elektrostimulationen. Tests haben gezeigt, dass gewisse "piezo-elektrische Vibratoren" dafür gut geeignet sind, wobei wir jedoch zukünftige bessere Möglichkeiten mit einschließen.

Die Reizkörper (RK) können einzeln, wie auch in Reiz-Displays (DY) gemeinsam mit anderen (RK) am Körper des Empfängers fixiert sein. Anstelle mehrerer Reiz-Displays (DY) können auch Chamäleon-Displays zum Ausführen aller Reize eingesetzt werden.

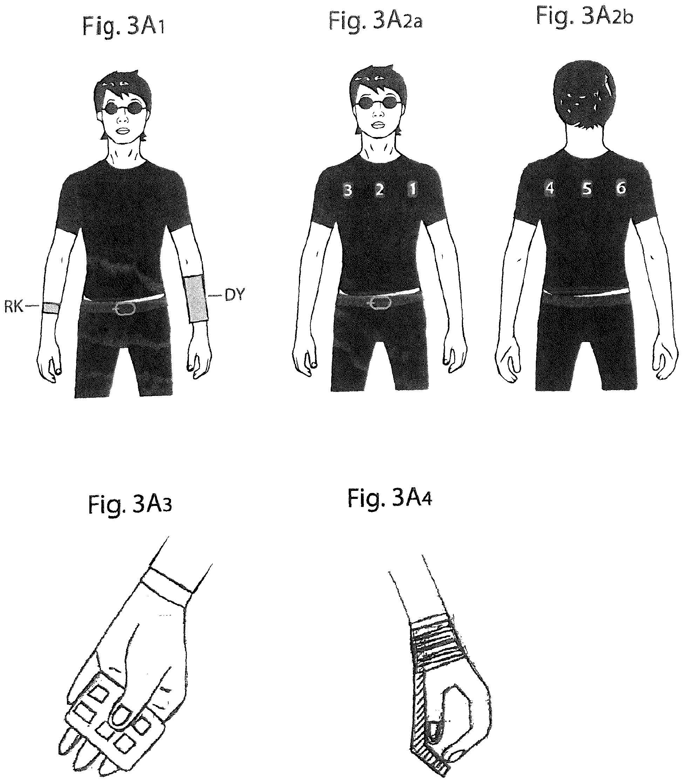

Die Skizze (Fig. 3A1) zeigt einen blinden Mann mit einem am rechten Unterarm fixierten Reizkörper (RK) und am linken Unterarm fixierten Reiz-Display (DY). Die Skizzen gemäß (Fig. 3A3) und (Fig. 3A4) zeigen, dass er mit der linken Hand auch zwei verschiedene Tasten selbst beim Stehen bedienen kann. D.h., dass er auch mit einer in der Nähe stehen Person mit Blue-Tooth kommunizieren könnte; ein besonders vorteilhafter Ersatz für die Kommunikation mit Lormen; siehe (2.1 D) und (6.4).

Die Skizzen gemäß (Fig. 3A2a) und (Fig. 3A2b) zeigen, dass der blinde Mann mit einem Chamäleon-Display (CD) mit drei Reizkörpern (1-2-3) auf der Brust und drei Reizkörpern (4-5-6) auf der Schulter ausgestattet ist. Sie befinden sich unsichtbar zwischen seiner Ober- und Unterkleidung (T-Shirt), sodass sie von anderen Personen nicht wahrgenommen werden können. Zum festen Fixieren des Displays am Körper kann auch ergänzend ein Gummigürtel eingesetzt werden.

SCHALLGEBER (BUZZER) DER AKUSTISCHEN AUSGABEN: Diese

Vorrichtungen und Ausstattungen sind bei den akustischen Ausgaben wesentlich einfacher, kleiner, handlicher und billiger als die der taktilen Reize für den Empfang mit Ohrhörern und/oder Hörgeräten. Bei einigen Personen können eventuell auch Knochenleitungen oder Cochlear-Implantate zum Erkennen der Laute eingesetzt werden.

Akustische Signale werden im Blindenwesen für zahlreiche Zwecke eingesetzt. Sie können auch vorteilhaft zum virtuellen Lesen von Texten eingesetzt werden, zumal beinahe von unbegrenzt viele Lauten (Signalen) Gebrauch gemacht werden kann. Bemerkenswert ist nebenbei auch, dass viele Blinde beim Einsatz synthetischer Sprachausgaben eine hohe Lesegeschwindigkeit erreichen können. Nachteilig bei der akustischen Ausgabe ist, dass für Personen ohne Hörvermögen diese Ausgaben nicht eingesetzt werden können.

SELBSTKONTROLLEN BEI DEN TAKTILEN ZEICHEN

A: Beispiel gemäß (Fig. 4B):

Auf dieser Tastatur (gemäß Fig. 5G) können 31 Zeichen auf 9 Tasten im Akkord geschrieben werden; der Kleinbuchstabe "m" mit Anschlag der Tasten (a+c). Beim Schreiben des Buchstaben "m" auf der Tastatur wird der korrespondierenden Buchstabe "m" auf der hierarchischen Struktur aufgerufen.

Der Reiz-3 wird mit dem Reizkörper-3 (RK3) und der Reiz-1 mit dem Reizkörper-1 (RK1) ausgegeben. Die Ausgaben erfolgen elektronisch schnell und daher faktisch zur gleichen Zeit wie die Eingabe.

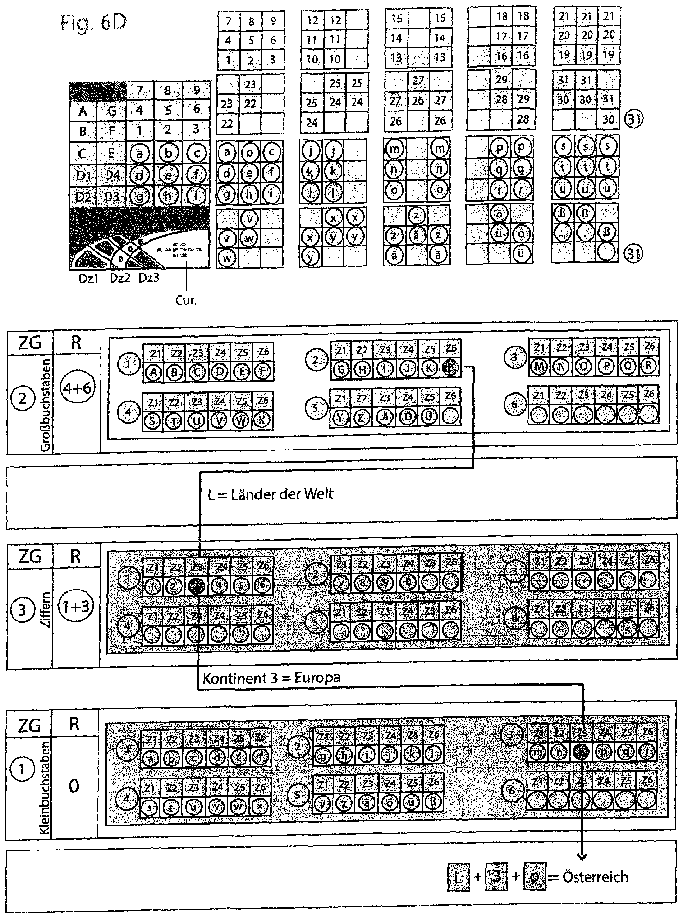

Beispiel einer Überhierarchie beim Einsätzen einer Mehrzwecktastatur gemäß (Fig. 6D). Diese Mehrzwecktastatur hat 9 alphabetische und 9 numerische Tasten, die sich besonders für den Aufruf von Wörtern und anderen textlichen Einheiten, unter Einsatz von Codes eignen. Zum Schreiben des Wortes "Österreich" kann bei diesem Beispiel zunächst der Großbuchstabe "L" (für Länder der Welt), dann der Kontinent "3" (für Europa) und sodann der Kleinbuchstaben "o" (für Österreich) geschrieben werden: "L3o" = Österreich.

Die Selbstkontrolle der akustischen Laute erfolgt genauso wie bei den taktilen Zeichen.

DAS LESEN FREMDER TEXTE

Das Prinzip der Selbstkontrolle der selbstgeschriebenen Texte kann auch beim Lesen beliebiger fremder Texte eingesetzt werden. Die in Vollschrift geschriebenen Wörter und andere textliche Einheiten können auch mit einem Komprimierungsprogramm in Kurzschrift umgewandelt werden, um die Lesegeschwindigkeit zu beschleunigen. Dabei können auch Kürzungen des Schreibers berücksichtigt werden. Die Geschwindigkeit des Lesens bestimmt der Leser selbst, wie er auch den Lesevorgang jederzeit unterbrechen kann.

Wie bei bereits ausgeführt, setzt das Lesen fremder Texte natürlich voraus, dass diese Zeichen digitalisiert sind. Sind sie das nicht, so müssen sie mit einem OCR-Scanner in digitalisierte Form umgewandelt werden.

SCHRIFTLICHE KOMMUNIKATION MIT FREMDEN PERSONEN

Die geschriebenen Texte können mit E-Mails, als SMS und mit Skypen auch interaktiv kommuniziert werden, so auch auf kurzer Distanz mit Blue-Tooth, wobei die Empfänger auch mehrere Personen mit und ohne Sehbehinderung sein können. Für Taubblinde ist das besonders wichtig.

6.6 DER AUTOMATISCHE EMPFANG WICHTIGER MITTEILUNGEN

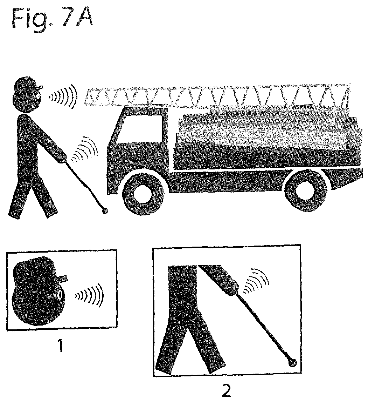

Die mangelnde Mobilität bei den Blinden liegt vor allem daran, dass der Kopf und die Brustgegend gegen die Gefahren des Stockgehen zu wenige abgesichert sind. Erfindungsgemäß sind daher Ultraschall-, Laser- oder Radargeräte vorgesehen, die in Kleinstausstattungen auf der Brille, Oberkörper und/oder am obere Stockende positioniert werden können; siehe (Fig. 7A). Bei Gefahr im Verzug kann von dort aus ein Vibrator aktiviert werden, der sich an einer anderen Körpersteile des Empfängers befindet. Derartige automatische Mitteilungen an den dem Empfänger können auch Weck- und Erinnerungsrufe sein.

B: Für derartige flüchtige Ausgaben können auch die Vibratoren (Reizkörper) unserer taktilen Zeichen eingesetzt werden. In diesen Fällen können auch alle Vibrationen gleichzeitig und andauernd ausgegeben werden.

MANUELLER ABRUF VON MESSDATEN FREMDER GERÄTE

Die meisten bedienbaren und selbsttätigen Geräte haben visuelle Displays, sodass sie Blinden nicht zugänglich sind, weil sie nur in wenigen Ländern mit Sprachausgaben ausgestattet sind. Beispiele bei Haushaltsgeräts: Küchen- und Körperwaagen, Mikrowellen, Waschmaschinen, Taschenrechner, Blutdruckmessgeräten, Maßbänder, usw.

BEISPIEL BEI UHREN

Die am häufigsten eingesetzten Geräte sind die Uhren, insbesondere Armbanduhren. So auch bei Blinden, für die es auch sprechende und einige wenige taktile Uhren gibt. Die sprechenden sind meist minderer Qualität, wie sie auch nicht sehr begehrt sind, weil sie fremden Personen gegenüber ihre Blindheit offenbaren. Die am meisten begehrten Uhren sind Analoguhren, wobei bei einer Uhr der gläserne Deckel zum Abtasten der Ziffern mit dem Zeigefinger aufgeklappt werden muss. Das können nur wenige Blinde meistern.

Erfindungsgemäß sind daher universell einsetzbare taktile Tastaturen mit hierarchischer Struktur vorgesehen, auf der die aktuellen Tageszeiten beim Tastendruck mit Vibrationen ausgegeben werden. Dieses Verfahren kann nicht nur bei Uhren, sondern auch bei vielen selbsttätigen und bedienbaren Messgeräten eingesetzt werden.

Spracherkennung und Volltextausgabe

ABRUF DER TAGESZEITEN BEI UHREN

DIE HIERARCHIE DER TAGESZEITEN: siehe Zeichengruppen (ZG).

Die Skizze gemäß (Fig. 4A3) zeigt die Hierarchie-1: die Stunden des Tages (12 oder 24), die Hierarchie-2: die Zehnminutenintervalle der Stunden und die Hierarchie-3: die Minuten innerhalb der Zehnminutenintervalle.

DIE HOTSPOTS: siehe Zeichenblöcke.

Die Stunden des Tages hat 4 Hotspots (HS), die für den Vormittag und Nachmittag eingesetzt werden können. Mit jedem Hotspot können drei Vibrationen ausgegeben werden. Ausgaben mit Vibrationen werden nur in dem Hotspot ausgegeben, der die aktuelle Stunde anzeigt: eine Vibration für die erste Stunde, zwei Vibrationen für die zweite Stunde und drei Vibrationen für die dritte Stunde des jeweiligen Hotspots.

DIE ANZAHL DER TASTEN ZUM ABRUFEN DER AKTUELLEN ZEITEINHEIT:

Die Abfragen erfolgen in unserem Beispiel mit drei Tasten, sodass für jede Hierarchie eine Taste eingesetzt werden kann; siehe nachstehend. Es können aber auch Versionen mit einer Taste oder zwei Tasten vorgesehen sein, wobei zwischen kurzen und langen Anschlägen unterschieden werden kann.

ABRUF DER AKTUELLEN STUNDE DES TAGES:

Mit langem Druck auf die Taste-1 kann zwischen Vormittag (a.m.) und Nachmittag (p.m.) unterschieden werden: 0-12 spezielle Vibration (~); 12-24 spezielle Vibration (-).

Normalanschlag der Taste-1: Beim ersten Tastenanschlag (T1) wird auch der Hotspot- 1 der Stunden (1-2-3) abgefragt; erfolgt keine Vibration, dann wird zweitem Tastenanschlag (T2) den Hotspot-2 der Stunden (4-5-6) abgefragt; erfolgt keine Vibration, dann mit drittem Tastenanschlag den Hotspot-3 der Stunden (7-8-9) abgefragt; erfolgt keine Vibration, dann mit viertem Tastenanschlag den Hotspot-4 der Stunden (10-11-12) abgefragt. Maximal 4 Anschläge, minimal 1 Anschlag, Durchschnitt 2,5 Anschläge, wobei pro Abruf maximal 3 kurze Vibrationen ausgegeben werden, die das Mitzählen unnötig machen.

ABRUF DES ZEHNMINUTENINTERVALLS EINER STUNDE:

Normalanschlag der Taste-2: Beim ersten Tastenanschlag (T2) wird auch der Hotspot- 1 abgerufen; erfolgt keine Vibration, so wird die Taste-2 nochmals gedrückt. Dabei kann eine Vibration erwartet werden. Maximal 2 Anschläge, minimal 1 Anschlag, Durchschnitt 1,5 Anschläge, wobei pro Abruf maximal 3 kurze Vibrationen ausgegeben werden, die das Mitzählen unnötig machen.

ABRUF DER MINUTEN INNERHALB DER ZEHNMINUTENINTERVALLE:

Normalanschlag der Taste-3: Beim ersten Anschlag wird auch der Hotspot-1 (HS1) abgerufen. Erfolgt dabei keine Vibration, so wird die Taste-3 solange gedrückt, bis eine Vibration erfolgt, wie bei den Stunden. Maximal 4 Anschläge, minimal 1 Anschlag, Durchschnitt 2,5 Anschläge, wobei pro Abruf maximal 3 kurze Vibrationen ausgegeben werden, die das Mitzählen unnötig machen.

Erfindungsgemäß wird zur Eingabe und zur Ausgabe eines aus Zeichen bestehenden Textes der Text bei der Eingabe über eine Eingabeeinheit und/oder bei der Ausgabe über eine Ausgabeeinheit als eine Kombination aus Volltext und Kurztext eingegeben bzw. ausgegeben, wobei der eingegebene und/oder ausgegebene Kurztext zumindest ein Kürzel in Form von Zeichen oder Zeichenkombinationen enthält, denen vorbestimmte Volltextinhalte zugeordnet sind.

Die Zeichen des Textes werden über eine Tastatur über die Kombination aus numerischen und/oder alphanumerischen Zeichen, vorzugsweise zwei Ziffern, eingegeben.

Bevorzugt erfolgt dies, ohne darauf beschränkt zu sein, durch die Verwendung von Einfingertastaturen.

Auf den Einfingertastaturen werden die Zeichen mit einem Finger der linken oder rechten Hand geschrieben. Sie haben, wie alle anderen Tastaturen, eine reale und beliebig viele virtuelle Tastaturoberflächen (der dritten Dimension), die mit der realen Tastaturoberflächen korrespondieren und aufgerufen werden können; vergleichbar mit der Umschaltfunktion des PC bei den Großbuchstaben, wobei die Texte in Voll- und Kurzschrift geschrieben werden können.

Die Eingabe der Zeichen des Textes erfolgt durch Drücken von Tasten der Tastatur, die durch z.B. Ziffern und/ oder Buchstaben gekennzeichnet sind.

Bei Verwendung einer numerischen Tastatur werden die Zeichen des Textes somit nicht direkt, sondern mit zwei Ziffern (0-9) geschrieben, sodass auf der realen Tastaturoberfläche 100 Anschläge mit den nummerischen Zeichen (00-99) geschrieben werden; mit Aufruf von weiteren virtueller Tastaturoberflächen jeweils 100 Zeichen mehr.

Da die Tastatur nur wenige Tasten benötigt, kann sie sehr klein ausgeführt werden.

Einfingertastatur "JOE"

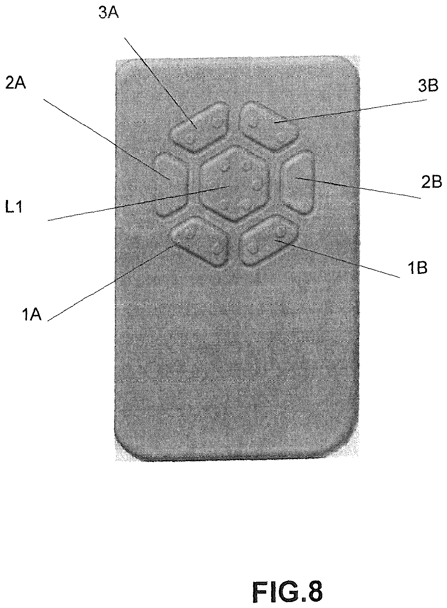

Die Einfingertastatur Joe hat gemäß Fig. 8 7 Tasten (1A-2A-3A-3B-2B-1B-L1), wobei (L1) die konventionelle Leertaste ist.

Die anderen Tasten umgeben (L1) oval, ringförmig oder trapezförmig sein. Die Sterne bei den umgebenden Tasten zeigen an, dass sie taktile Markierungen haben können, wenn diese das Blindwahrnehmen der Tasten erleichtern. In der Grundstellung befindet sich der Finger auf der Leertaste (L1),

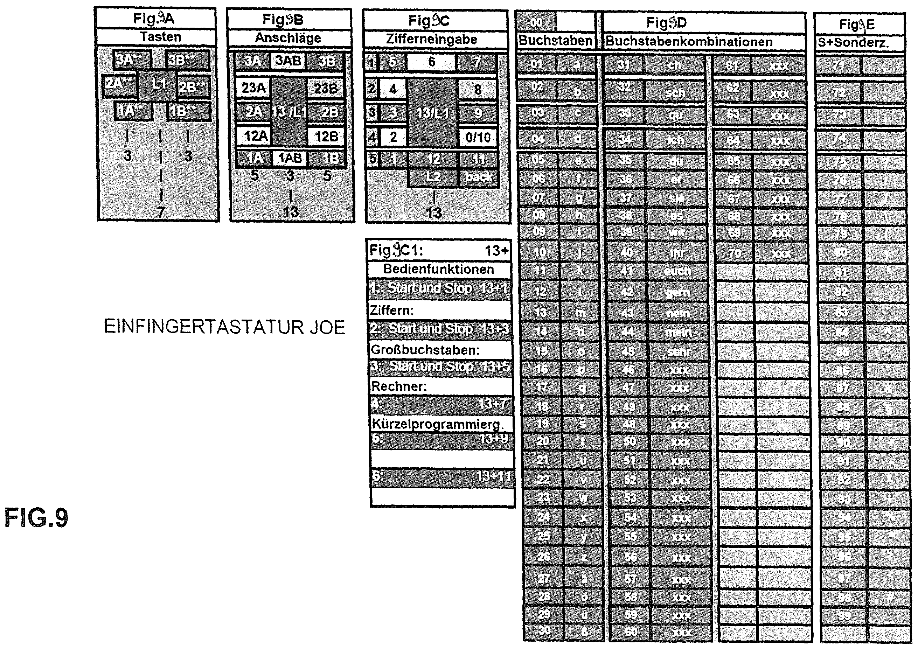

Fig. 9A zeigt alle 13 Anschlagspositionen, die obigen 7 Tasten und Fig.9B die 6 Kombinationsanschläge (12A-23A-3AB-23B-12B-1AB), bei denen jeweils 2 benachbarte Tasten gemeinsam gedrückt werden können.

Fig. 9C zeigt die Ziffern (1-2-3-4-5-6-7-8-9-0), wobei mit zwei Ziffernanschlägen die Nummern automatisch geschrieben werden. Die Zehnertaste (10) wird nur als Nulltaste (0) verwendet. Die Tasten (11-12-13) sind für einfache Anschläge vorgesehen. Die Taste (11/back) ist die Löschtaste, wie die Rücktaste beim PC; die Kombinationstaste (12) ist Leertaste (L2), die zum Abrufen gespeicherter Kürzel eingesetzt wird; die Taste (13) ist die konventionelle Leertaste (L1).

Fig. 9C1 zeigt Kombinationsanschläge der Taste (13/L1) mit den Tasten (1-3-5-7-9-11). Diese Anschläge können für beliebige Zwecke programmiert werden, wie die Beispiele (13+1) (13+3) (13+5) zeigen. Beispiel: Wenn ein oder mehrere Ziffern geschrieben werden sollen, wird die Zifferntaste (13+1) aktiviert und danach deaktiviert. Wenn der nächste Buchstabe ein Großbuchstabe ist, wird die Tastenkombination (13+3) gedrückt, sollen alle Buchstaben groß geschrieben werden, mit zweifachem Anschlag von (13+3) und einfacher Deaktivierung danach. Soll die Rechenfunktion der Tastatur aufgerufen werden (hier nicht dargestellt) wird die Tastenkombination (13+5) aktiver, usw. Der Bedarf an Bedienfunktionen: Mit (C1) können auch (a) virtuelle Tastenoberflächen und Menüs für Bedien- und beliebige andere Funktionen aufgerufen werden.

Fig. 9D zeigt die 100 (00-99) Zweifachanschläge, wobei (00) noch nicht berücksichtigt wurde, da das Alphabet bewusst (01=a) begonnen und mit (30=ß) beendet wurde, sodass (00) zum Aufrufen einer virtuellen Tastaturoberfläche eines Menüs oder andere wichtige Zwecke eingesetzt werden kann.

Zum Schreiben von Ziffern und Großbuchstaben wurde in unserem Beispiel bewusst Bedienfunktionen (C1) vorgesehen und nicht in die Tabelle Fig. 9D aufgenommen.

Fig. 9E zeigt die Zweifachanschläge für die Satz- und Sonderzeichen. Auch für diese gibt es eine Alternativeingabe. Sie besteht darin, dass außer den am häufigsten verwendeten Satz- und Sonderzeichen "mnemonische Kürzel" zum Aufrufen dieser Zeichen eingesetzt werden, sodass beispielsweise das Fragezeichen "?" mit "fz", frage" oder "fragezeichen" geschrieben und mit Druck auf die Leertaste (L2) automatisch umgewandelt werden. Das erübrigt das Auswendiglernen all jener Satz- und Sonderzeichen, die nur selten benötigt werden. Auf diese Weise werden nur sehr wenige Numerische Zeichen zum Schreiben benötigt, die für wichtigere Zwecke eingesetzt werden können; so auch zur Erweiterung der Bedienbefehle.

Der Finger befindet sich bei der Einfingertastatur Joe in der Grundstellung im Zentrum der Tastatur, von wo aus die Anschlagspositionen mit kurzem Fingerweg erreicht werden können.

Die Einfingertastatur "Alpha" gemäß Fig.10C benötigt nur 5 Tasten, weist aber dennoch 13 Anschlagspositionen auf. Anstelle von 6 bietet sie jedoch nur 4 Bedienfunktionen. Dieser Nachteil kann jedoch ausgeglichen werden, da für die Bedienfunktionen eine Menüfunktion vorgesehen sein kann, mit der zahlreiche Bedien- und andere Funktionen aktiviert werden können; abgesehen davon, dass auch auf diese Weise eine oder mehrere virtuelle Tastaturoberflächen aufgerufen werden können. Auch die Eingabematrix für die Kleinbuchstaben und die Buchstabenkombinationen deswegen nicht eingeschränkt werden muss; siehe Fig. 9D der Einfingertastatur Joe.

Die Eingabe des Volltextes "Patent Cartec" über eine Einfingertastatur ist beispielhaft in Tabelle 1 dargestellt.

Jeder Buchstabe des Volltextes wird über eine Tasteneingabe aus zwei zugehörigen Ziffern eingegeben, z.B. für "P" wird 1+6, für "a" wird 0+1 eingegeben. Zwischen zwei Wörtern des Volltextes wird jeweils ein Leerzeichen eingegeben.

Tabelle 1

| Buchstabe | Tasteneingabe Lt Fig. C | Tasteneingabe Lt Fig. A | Bemerkung |
|---|---|---|---|
| | (13/L1+3) | (L1+2A) | Großschreibung |
| P | 1+6 | 1A+ (3A+3B) | |
| | (13/L1+3) | (L1+2A) | *Kleinschreibung* |
| a | 0+1 | (1B+2B)+1A | |
| t | 2+0 | (1A+2A)+(1B+2B) | |
| e | 0+5 | (1B+2B) +3A | |
| n | 1+4 | 1A+ (2A+3A) | |
| t | 2+0 | (1A+2A) + (1B+2B) | |
| | 13/L1 | L1 | Leerzeichen |
| | (13/L1+3) | (L1+2A) | Großschreibung |
| C | 0+3 | (1B+2B)+2A | |
| | (13/L1+3) | (L1+2A) | Kleinschreibung |
| a | 0+1 | (1B+2B) +1A | |
| r | 1+8 | 1A+ (2B+3B) | |
| e | 0+5 | (1B+2B)+3A | |
| t | 2+0 | (1A+2A)+(1B+2B) | |
| e | 0+5 | (1B+2B) +3A | |

(fortgesetzt)

| Buchstabe | Tasteneingabe Lt Fig. C | Tasteneingabe Lt Fig. A | Bemerkung |
|---|---|---|---|
| c | 0+3 | (1B+2B) +2A | |
| | 13/L1 | L1 | Leerzeichen |

Klammerausdrücke sind Akkord- oder Kombinationsanschläge. Eine beispielhafte persönliche Kürzel-Programmierung des Worts "Patent" mit einer Einhandtastatur ist in Tabelle 2 gezeigt.

Tabelle 2

| Buchstabe | Tasteneingabe Lt Fig. C | Tasteneingabe Lt Fig. A | Bemerkung |
|---|---|---|---|
| | 13/L1+7 | (L1+3B) | Start Kürzel-Programmierung |
| P | 1+6 | 1A+(3A+3B) | |
| a | 0+1 | (1B+2B)+1A | |
| t | 2+0 | (1A+2A)+(1B+2B) | |
| e | 0+5 | (1B+2B)+3A | Kürzeltext |
| n | 1+4 | 1A+(2A+3A) | |
| t | 2+0 | (1A+2A)+(1B+2B) | |
| | 12 | (1A+1B) | Leerzeichen 2 |
| P | 1+6 | 1A+(3A+3B) | Kürzelcode |
| a | 0+1 | (1B+2B)+1A | |
| | 13/L1+7 | (L1+3B) | Stopp Kürzel-Programmierung |

Die Eingabe von "Patent Caretec" mit Volltext und Kurztext ist beispielhaft in Tabelle 3 gezeigt. Nach Eingabe der Buchstaben "p" und "a" folgt ein Leerzeichen 2, aus dem erkannt wird, dass es sich um ein Kürzel handelt, wofür das Wort "Patent" abgerufen werden kann.

Tabelle 3

| Buchstabe | Tasteneingabe Lt Fig. C | Tasteneingabe Lt Fig. A | Bemerkung |
|---|---|---|---|
| P | 1+6 | 1A+(3A+3B) | |
| a | 0+1 | (1B+2B)+1A | |
| | 12 | (1A+1B) | Leerzeichen 2 |
| | (13/L1+3) | (L1+2A) | Großschreibung |
| C | 0+3 | (1B+2B)+2A | |
| | (13/L1+3) | (L1+2A) | Kleinschreibung |
| a | 0+1 | (1B+2B)+1A | |
| r | 1+8 | 1A+(2B+3B) | |
| e | 0+5 | (1B+2B)+3A | |
| t | 2+0 | (1A+2A)+(1B+2B) | |
| e | 0+5 | (1B+2B)+3A | |
| c | 0+3 | (1B+2B)+2A | |
| | 13/L1 | L1 | Leerzeichen |

Die Ausgabe des Textes kann nach Umwandlung in Volltext erfolgen oder es kann auch die Kombination aus Volltext und Kurztext ausgegeben werden.

Um beim Lesen des ausgegebenen Textes unterscheiden zu können, ob es sich bei einem Ausdruck um ein Kürzel handelt, kann dieses auf verschiedene Arten markiert werden.

Smartphones mit Spracherkennung können die gesprochenen Texte z.B. in geschriebenen Text umsetzen. Erfindungsgemäß kann die Ausgabe des geschriebenen Textes als Kombination aus Volltext und Kurztext erfolgen. Der Kurztext kann dabei in anderer Farbe als der Volltext angezeigt, oder z.B. in Kursivschrift, unterstrichen, oder anders hervorgehoben werden.

Bei taktiler Ausgabe der Kombination aus Volltext und des Kurztext kann der Kurztext mit einer anderen Schwingungsfrequenz ausgegeben werden, sodass der Anwender diesen vom Volltext unterscheiden kann.

Bei der Ausgabe des Kurztextes kann entweder der ursprüngliche Kürzelsatz Anwendung finden, oder es erfolgt eine Umwandlung in eine für den Lesenden vertraute Kürzeldefinition.

Diese Beschreibung beschreibt mehrere Ausführungsformen. Die beschriebenen Ausführungsformen sind jedoch nicht so zu verstehen, dass sie notwendigerweise die Erfindung definieren. Die beschriebenen Ausführungsformen definieren nur dann die Erfindung, wenn sie in den Umfang der beigefügten Ansprüche fallen. Daher ist der Schutzumfang der vorliegenden Erfindung ausschließlich durch die beigefügten Ansprüche definiert.

**Patentansprüche**

1. Verfahren zur Eingabe und zur Ausgabe eines aus Zeichen bestehenden Textes, wobei der Text bei der Eingabe über eine Eingabeeinheit als eine Kombination aus Volltext und Kurztext eingegeben wird, und wobei der eingegebene Kurztext zumindest ein Kürzel in Form von Zeichen oder Zeichenkombinationen enthält, denen vorbestimmte Volltextinhalte zugeordnet sind, **dadurch gekennzeichnet, dass** bei der Eingabe zum Trennen von Volltext und Kurztext nach jedem Volltext-Wort die Leertaste (L1) und nach jedem Kürzel eine vorbestimmte Taste (L2) betätigt wird, wobei gegebenenfalls der Text bei der Ausgabe über eine Ausgabeeinheit als eine Kombination aus Volltext und Kurztext ausgegeben wird, und wobei der ausgegebene Kurztext zumindest ein Kürzel in Form von Zeichen oder Zeichenkombinationen enthält.

2. Verfahren nach Anspruch 1, wobei die den Kürzeln zugeordneten, vorbestimmten Volltextinhalte Textteile, Sätze, Worte, Floskeln, Standardtexte oder dergleichen sind.

3. Verfahren nach Anspruch 1 oder 2, wobei die Zeichen aus der Kombination aus numerischen und/oder alphanumerischen Zeichen, vorzugsweise zwei Ziffern einer Tastatur eingegeben werden.

4. Verfahren nach Anspruch 1, wobei die Ausgabe elektronisch gespeichert oder übertragen wird und in kombiniertem Volltext und Kurztext ausgegeben wird.

5. Verfahren nach Anspruch 1, wobei zur Eingabe und zur Ausgabe des Textes Zeichen eines Zeichensatzes verwendet werden, wobei die Zeichen über eine Tastatur mit einer Vielzahl von Tasten eingegeben und über die Ausgabeeinheit ausgegeben werden, wobei zwischen Ein- und Ausgabe eine Zwischenspeicherung und/oder Übertragung der Zeichen oder Zeichenkombinationen erfolgt, und dass bei der Zeicheneingabe die Zeichen wahlweise als Volltext oder als Kurztext eingegeben werden, sodass abwechselnd die Eingabe von Volltext- und Kurztext-Abschnitten aufeinanderfolgt, wobei für die Eingabe der Kurztext-Abschnitte Kürzel in Form von Zeichen oder Zeichenkombinationen definiert sind, die über eine zugehörige Zeichenkombination auswählbar sind.

6. Verfahren nach einem der vorhergehenden Ansprüche, wobei bei der Ausgabe der Kurztexte die bei der Eingabe verwendeten Definitionen für das zumindest eine Kürzel oder andere Kürzel-Definitionen verwendet werden.

7. Verfahren nach einem der Ansprüche 1 bis 6, wobei der Text bei der Ausgabe nicht als eine Kombination aus Volltext und Kurztext ausgegeben wird, sondern vor der Ausgabe des Textes die Kurztext-Abschnitte in Volltext-Abschnitte umgewandelt und mit den bereits bestehenden Volltext-Abschnitten ausgegeben werden.

8. Verfahren nach einem der Ansprüche 1 bis 7, wobei jeder der Volltext-Abschnitte eines oder mehreres aus Zeichen des Zeichensatzes, Silben, Wörter, Redewendungen, Standardtexte oder textliche Informationen umfasst.

9. Verfahren nach einem der Ansprüche 1 bis 8, wobei die eingegebenen Zeichen über eine taktile Reizerzeugungsvorrichtung mittels taktiler Ausgabe ausgegeben werden.

10. Verfahren nach Anspruch 9, wobei die eingegebenen Zeichen über eine taktile Reizerzeugungsvorrichtung zur Kontrolle oder Korrektur mittels taktiler Ausgabe ausgegeben werden, und gegebenenfalls zusätzlich zwischengespeichert werden, oder der im Volltext und Kurztext vorliegende Text zu einem entfernten Empfänger übertagen werden.

11. Verfahrer nach einem der Ansprüche 9 bis 10, wobei die eingegebenen Zeichen über eine taktile Reizerzeugungsvorrichtung zur Kontrolle oder Korrektur mittels taktiler Ausgabe ausgegeben und zusätzlich in Sprache konvertiert werden.

12. Verfahren nach einem der vorangegangenen Ansprüche, wobei eine bidirektionale Kommunikation zwischen einem ersten und einem zweiten Kommunikationspartner erfolgt, bei der über den ersten Kommunikationspartner eine Eingabe die Eingabeeinheit, welche eine Tastatur ist, in Volltext und Kurztext erfolgt und in Sprache konvertiert und ausgegeben wird und die verbale Antwort des zweiten Kommunikationspartners in Volltext und Kurztext umgewandelt und
ausgegeben wird.

13. Verfahren nach einem der vorangegangenen Ansprüche, wobei die Zeicheneingabe auf einer Einhandtastatur mit einer Vielzahl von Tasten erfolgt, wobei gleichzeitig eine oder mehrere Tasten betätigt werden.

**Claims**

1. A method for inputting and outputting a text consisting of characters, said text during input being input using an input unit in the form of a combination of full text and short text, and said input short text containing at least one abbreviation in the form of characters or character combinations to which predefined full text contents have been allocated, **characterized in that** during input, the space bar (L1) is actuated after each full text word and a predefined key (L2) is actuated after each abbreviation to separate full text and short text, wherein the text during output using an output unit being optionally output in the form of a combination of full text and short text and the output short text containing at least one abbreviation in the form of characters or character combinations.

2. The method according to claim 1, wherein the predefined full text contents allocated to the abbreviations are text parts, sentences, words, phrases, standard texts, or the like.

3. The method according to claim 1 or 2, wherein the characters of the combination of numeric and/or alphanumeric characters, preferably two numbers of a keyboard are input.

4. The method according to claim 1, wherein the output is stored electronically or transmitted and output in the form of a combination of full text and short text.

5. The method according to claim 1, wherein characters of a set of characters are used for inputting and outputting the text, said characters being input using a keyboard with a plurality of keys and output via the output unit, the characters or combinations of characters being buffered and/or transmitted between input and output, and in that the characters, when input, are input either as full text or as short text, so that full text and short text sections are input alternatingly, abbreviations in the form of characters or combinations of characters being defined for inputting the short text sections, said abbreviations being selectable via allocated character combinations.

6. The method according to any one of the preceding claims, wherein the definitions used for the at least one abbreviation during input or other abbreviation definitions are used for outputting the short texts.

7. The method according to any one of the claims 1 to 6, wherein the text is not output as a combination of full text and short text during output, but before the output of the text, the short text sections are converted into full text sections and output with the already existing full text sections.

8. The method according to any one of the claims 1 to 7, **characterized in that** each of the full text sections comprises one or more of characters of a set of characters, syllables, words, idioms, standard texts, or textual information.

9. The method according to any one of the claims 1 to 8, **characterized in that** the input characters are output via a tactile stimulus generating device by means of tactile output.

**10.** The method according to claim 9, wherein the input characters are output via a tactile stimulus generating device by means of tactile output for being checked or corrected and are optionally additionally buffered or in that the text available as full text or short text is transmitted to a remote receiver.

**11.** The method according to one of the claims 9 to 10, wherein the input characters are output via a tactile stimulus generating device by means of tactile output for being checked or corrected and are additionally converted into full text and speech.

**12.** The method according to any one of the preceding claims, wherein bidirectional communication takes place between a first and a second communication partner, the first communication partner inputting full text and short text via an input unit, being a keyboard is converted into speech and the verbal response of the second communication partner being converted into full text and short text and output.

**13.** The method according to any one of the preceding claims, wherein the characters are input via a single-hand keyboard using a plurality of keys, one or several keys being actuated simultaneously.


**Revendications**

**1.** Procédé d'entrée et de sortie d'un texte constitué de caractères, le texte étant entré lors de l'entrée par un dispositif d'entrée sous la forme d'une combinaison de texte intégral et de texte abrégé, et le texte abrégé entré contenant au moins une abréviation sous la forme de caractères ou de combinaisons de caractères auxquels sont associés des contenus de texte complet prédéfinis, **caractérisé en ce que**, lors de l'entrée, pour séparer le texte intégral et le texte abrégé, la barre d'espacement (L1) est actionnée après chaque mot de texte intégral et une touche prédéterminée (L2) est actionnée après chaque abréviation, le texte étant éventuellement sorti, lors de la sortie via une unité de sortie, sous la forme d'une combinaison de texte intégral et de texte abrégé, et le texte abrégé sorti contenant au moins une abréviation sous la forme de caractères ou de combinaisons de caractères.

**2.** Procédé selon la revendication 1, dans lequel les contenus de texte intégral prédéterminés associés aux abréviations sont des parties de texte, des phrases, des mots, des phrases toutes faites, des textes standard ou similaires.

**3.** Procédé selon la revendication 1 ou 2, dans lequel les caractères sont saisis à partir de la combinaison de caractères numériques et/ou alphanumériques, de préférence deux chiffres d'un clavier.

**4.** Procédé selon la revendication 1, dans lequel la sortie est enregistrée ou transmise électroniquement et est sortie sous forme combinée de texte intégral et de texte abrégé.

**5.** Procédé selon la revendication 1, dans lequel des caractères d'un jeu de caractères sont utilisés pour l'entrée et la sortie du texte, les caractères étant entrés au moyen d'un clavier comportant une pluralité de touches et sortis au moyen du dispositif de sortie, un enregistré temporairement et/ou une transmission des caractères ou des combinaisons de caractères étant effectuées entre l'entrée et la sortie, et en ce que, lors de l'entrée des caractères, les caractères sont entrés au choix sous forme de texte intégral ou de texte abrégé, de sorte que l'entrée de sections de texte intégral et de texte abrégé se succède en alternance, des abréviations sous forme de caractères ou de combinaisons de caractères étant définies pour l'entrée des sections de texte abrégé et pouvant être sélectionnées au moyen d'une combinaison de caractères associée.

**6.** Procédé selon l'une quelconque des revendications précédentes, dans lequel, lors de la sortie des textes abrégés, on utilise les définitions utilisées lors de l'entrée pour l'au moins une abréviation ou d'autres définitions d'abréviation.

**7.** Procédé selon l'une quelconque des revendications 1 à 6, dans lequel le texte n'est pas sorti comme une combinaison de texte intégral et de texte abrégé, mais avant la sortie du texte, les sections de texte abrégé sont converties en sections de texte intégral et sorties avec les sections texte intégral existantes.

**8.** Procédé selon l'une quelconque des revendications 1 à 7, dans lequel chacune des sections de texte intégral comprend un ou plusieurs des caractères du jeu de caractères, syllabes, mots, expressions, textes standard ou informations textuelles.

**9.** Procédé selon l'une quelconque des revendications 1 à 8, dans lequel les caractères entrés sont sortis par un dispositif de génération de stimuli tactiles au moyen d'une sortie tactile.

10. Procédé selon revendication 9, dans lequel les caractères entrés sont sortis par un dispositif de génération de stimuli tactiles pour contrôle ou correction par sortie tactile, et éventuellement en outre enregistrés temporairement, ou le texte présent en texte intégral et en texte abrégé est transmis à un récepteur éloigné.

11. Procédé selon l'une des revendications 9 á 10, dans lequel les caractères entrés sont sortis par un dispositif de génération de stimuli tactiles pour contrôle ou correction par sortie tactile et sont en outre convertis en texte intégral en parole.

12. Procédé selon l'une quelconque des revendications précédentes, dans lequel une communication bidirectionnelle est établie entre un premier et un deuxième partenaire de communication, dans lequel une entrée est effectuée par le premier partenaire de communication en texte intégral et abrégé et est convertie en parole et la réponse verbale du deuxième partenaire de communication est convertie en texte intégral et abrégé et est sortie.

13. Procédé selon l'une quelconque des revendications précédentes, dans lequel la saisie de caractères s'effectue sur un clavier à une main comportant une pluralité de touches, une ou plusieurs touches étant actionnées simultanément.

## Fig. 1A

P1 —— P4
P2 —— P5
P3 —— P6

## Fig. 1B

P1 —— P4
P2 —— P5
P3 —— P6
P7 —— P8

## Fig. 1C

| T7 | T3 | T2 | T1 | | T4 | T5 | T6 | T8 |
|----|----|----|----|----|----|----|----|----|
| F4 | F3 | F2 | F1 | | F1 | F2 | F3 | F4 |

## Fig. 1D

| M 1 | M 2 | M 3 | M 4 | M 5 | M 6 | M 7 | M 8 | M 9 | M 10 | M 11 | M 12 | M 13 | M 14 | M 15 | M 16 | M 17 | M 18 | M 19 | M 20 | M 21 | M 22 | M 23 | M 24 |

Fig. 2A

Fig. 2B

Fig. 2C

Fig. 2D

Fig. 2E

Fig. 2F

Fig. 2G

Fig. 2H

Fig. 2I

Fig. 2J

Fig. 2K

Fig. 2L

Fig. 3A₁

Fig. 3A2a

Fig. 3A2b

Fig. 3A₃

Fig. 3A4

Fig. 4A1

Fig. 4A2

Fig. 4A3

Fig. 4B

Fig. 5A

Fig. 5B

Fig. 5C

Fig. 5D

Fig. 5E

Fig. 5F

Fig. 5G

Fig. 5H

Fig. 5I

Fig. 5J

Fig. 5K

Fig. 5L

Fig. 5M

Fig. 5N

Fig. 5O

## Fig. 6A

## Fig. 6B

Dz1 Dz2 Dz3

Cur.

## Fig. 6C

**C - DUR**

| H | C | D |
|---|---|---|
| F | G | A |
| C | D | E |

F1    F2    F3

**C - MOL**

| B | C | D |
|---|---|---|
| F | G | AS |
| C | D | ES |

F1    F2    F3

**C - Harmonisch MOL**

| H | C | D |
|---|---|---|
| F | G | AS |
| C | O | ES |

F1    F2    F3

**C - Melodisches MOL**

| H | C | D |
|---|---|---|
| F | G | A |
| C | D | ES |

F1    F2    F3

**C - Mixolydisch MOL**

| HES | C | D |
|-----|---|---|
| F | G | A |
| C | D | E |

F1    F2    F3

**C - Phrygisch MOL**

| HES | C | D |
|-----|---|---|
| F | G | GIS |
| C | CIS | DIS |

F1    F2    F3

## EP 3 635 523 B1

**Fig. 6D**

Fig. 7A

1

2

FIG.8

EINFINGERTASTATUR JOE

FIG.9

# EINFINGERTASTATUR ALPHA

| Fig.10A | Fig.10B | Fig.10C |
|---------|---------|---------|
| Anschläge | Zifferneingabe | Final Design |

FIG.10

EP 3 635 523 B1

# EINFINGERTASTATUR ALPHA

| Fig.10A | Fig.10B | Fig.10C |
|---------|---------|---------|
| Anschläge | Zifferneingabe | Final Design |

FIG.10

EP 3 635 523 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120072838 A1
- US 20150113073 A1
- WO 0111849 A
- US 20110216006 A1
- US 20160005150 A1
- US 20080297475 A1